(19) Europäisches Patentamt
European Patent Office
Office européen des brevets

(11) EP 4 738 517 A1

(12) EUROPEAN PATENT APPLICATION
published in accordance with Art. 153(4) EPC

(43) Date of publication:
**06.05.2026 Bulletin 2026/19**

(21) Application number: **24849100.3**

(22) Date of filing: **26.07.2024**

(51) International Patent Classification (IPC):
***H01M 10/0567*** *(2010.01)* ***H01M 10/052*** *(2010.01)*
***H01M 10/054*** *(2010.01)* ***H01M 10/0568*** *(2010.01)*
***H01M 10/0569*** *(2010.01)*

(52) Cooperative Patent Classification (CPC):
**H01M 10/052; H01M 10/054; H01M 10/0567; H01M 10/0568; H01M 10/0569;** Y02E 60/10

(86) International application number:
**PCT/JP2024/026840**

(87) International publication number:
**WO 2025/028448 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.07.2023 JP 2023123775**

(71) Applicant: **Central Glass Company, Limited**
**Ube-shi, Yamaguchi 755-0001 (JP)**

(72) Inventors:
- **ESAKI, Ryota**
  **Tokyo 101-0054 (JP)**
- **TERADA, Ryosuke**
  **Tokyo 101-0054 (JP)**
- **TOKOMOTO, Junichi**
  **Tokyo 101-0054 (JP)**
- **KAWABATA, Wataru**
  **Tokyo 101-0054 (JP)**
- **TAKAHASHI, Mikihiro**
  **Tokyo 101-0054 (JP)**

(74) Representative: **Manitz Finsterwald**
**Patent- und Rechtsanwaltspartnerschaft mbB**
**Martin-Greif-Straße 1**
**80336 München (DE)**

# (54) NONAQUEOUS ELECTROLYTE SOLUTION AND NONAQUEOUS ELECTROLYTE BATTERY

(57) A nonaqueous electrolyte solution which contains (1) a compound represented by the general formula (1) described in the specification, (11) a solute, (111) a nonaqueous organic solvent, and hydrogen fluoride, in which a concentration of the hydrogen fluoride with respect to a total amount of the nonaqueous electrolyte solution is 0.1 ppm by mass or more and 180 ppm by mass or less, and a nonaqueous electrolyte solution battery including the nonaqueous electrolyte solution.

EP 4 738 517 A1

**Description**

TECHNICAL FIELD

The present disclosure relates to a nonaqueous electrolyte solution and a nonaqueous electrolyte solution battery.

BACKGROUND ART

In recent years, there is a rapidly increasing demand for batteries that have a high capacity, high output, and a high energy density and that can be mounted as an auxiliary power source for electric vehicles, hybrid vehicles, and fuel-cell vehicles in addition to a power storage system for a compact and high energy density application, such as information-related devices and communication devices, that is, personal computers, video cameras, digital cameras, mobile phones, and smartphones. In addition, there is an increasing demand for batteries that can be used for a long period of time even in power storage systems for large and power applications such as power storage. Nonaqueous electrolyte solution batteries such as lithium secondary batteries have been actively developed as candidates for these various power storage systems. A nonaqueous electrolyte solution battery generally includes a positive electrode, a negative electrode, a separator, and a nonaqueous electrolyte solution.

Patent Literature 1 proposes improving the residual characteristics and the suppression of an increase in resistance during high-temperature storage by using an electrolyte solution in which hydrofluoric acid is added, as an additive, to diglycolic anhydride.

Patent Literature 2 proposes to improve the cycle characteristics by using an acid anhydride having a specific ring structure and a carbonate having a fluorine atom in an electrolyte solution.

Patent Literature 3 proposes to improve the cycle characteristics and the low-temperature characteristics by using a silicon compound in an electrolyte solution.

Patent Literature 4 proposes to improve the storage characteristics by using a nonaqueous electrolyte solution containing lithium bis(fluorosulfonyl)imide as a solute.

Patent Literature 5 proposes to suppress self-discharge and improve the storage characteristics after charging by using lithium monofluorophosphate or lithium difluorophosphate in an electrolyte solution.

Patent Literature 6 proposes using a fluorosulfonic acid salt in a nonaqueous electrolyte solution to maintain high input/output characteristics and impedance characteristics even after a durability test.

Patent Literature 7 proposes that the decomposition on the carbon negative electrode with the progress of charge-discharge cycles can be suppressed by using a cyclic sulfate ester in a nonaqueous electrolyte solution.

Patent Literature 8 proposes that the reductive decomposition of the electrolyte solution during high-temperature storage is greatly suppressed and that, as a result, a battery having low self-discharge, in which deterioration of load characteristics and resistance is significantly suppressed and in which the amount of gas generated in the battery is low can be obtained by using a cyclic sultone (unsaturated sultone) in a nonaqueous electrolyte solution.

Patent Literature 9 proposes to improve the charge-discharge efficiency and cycle characteristics by using a sulfonic anhydride in an electrolyte solution.

CITATION LIST

PATENT LITERATURE

Patent Literature 1: JP2002-008717A
Patent Literature 2: JP5412705B
Patent Literature 3: JP3497812B
Patent Literature 4: JP4847675B
Patent Literature 5: JP3439085B
Patent Literature 6: JP5353923B
Patent Literature 7: JP3760540B
Patent Literature 8: JP4190162B
Patent Literature 9: JP4379567B


SUMMARY OF INVENTION

TECHNICAL PROBLEM

Patent Literature 1 discloses that when 0.1% by weight of hydrogen fluoride is contained in a nonaqueous electrolyte solution, the high-temperature storage characteristics of a secondary battery including the nonaqueous electrolyte solution are improved. However, the studies by the present disclosers have revealed that the secondary battery described in Patent Literature 1 has a problem of high initial resistance.

The present disclosure has been made in view of the above circumstances, and an object thereof is to provide a nonaqueous electrolyte solution capable of lowering the initial resistance of a nonaqueous electrolyte solution battery and a nonaqueous electrolyte solution battery having low initial resistance.

SOLUTION TO PROBLEM

As a result of intensive studies to solve such a problem, the present disclosers have found that a nonaqueous electrolyte solution battery having low initial resistance can be provided when a concentration of hydrogen fluoride is reduced to less than one fifth of the concentration described in Patent Literature 1 in a nonaqueous electrolyte solution containing a specific acid anhydride compound, a nonaqueous organic solvent, and a solute. Specifically, the above problem can be solved by the following configuration.

[1] A nonaqueous electrolyte solution containing (I) a compound represented by the following general formula (1), (II) a solute, (III) a nonaqueous organic solvent, and hydrogen fluoride
in which a concentration of the hydrogen fluoride with respect to a total amount of the nonaqueous electrolyte solution is 0.1 ppm by mass or more and 180 ppm by mass or less.

[Chem. 1]

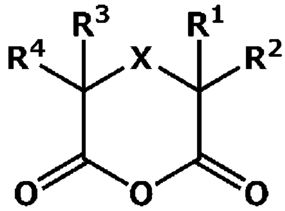

(1)

In the general formula (1), $R^1$ to $R^4$ each independently represent a hydrogen atom, a halogen atom, an alkyl group, an alkenyl group, or an aryl group. X represents an oxygen atom, a sulfur atom, or an $SO_2$ group.

[2] The nonaqueous electrolyte solution according to [1], further containing (IV) at least one compound selected from the group consisting of the following compounds (2) to (9).

A compound (2): at least one compound selected from the group consisting of a compound represented by the following general formula (2-1) and a compound represented by the following general formula (2-2).

[Chem. 2]

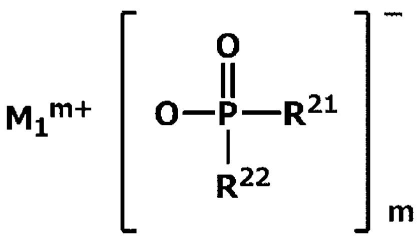

(2-1)

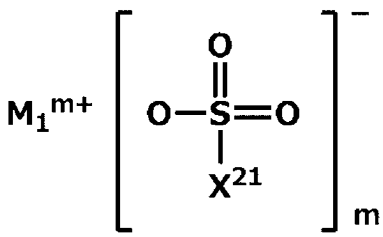

(2-2)

In the general formula (2-1), $R^{21}$ and $R^{22}$ are each independently a fluorine atom or an organic group selected from the group consisting of an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms. In the organic group, a fluorine atom, an oxygen atom, and/or an unsaturated bond may be present. Moreover, the general formula (2-1)

includes at least one P-F bond.

In the general formula (2-2), $X^{21}$ is a fluorine atom or an organic group selected from the group consisting of an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms. The organic group may contain at least one fluorine atom. In the organic group, an oxygen atom and/or an unsaturated bond may be present.

In the general formula (2-1) and the general formula (2-2), $M_1^{m+}$ is a proton, a metal cation, or an onium cation. m represents a valence of the corresponding cation.

A compound (3): at least one compound selected from the group consisting of a compound represented by the following general formula (3-1), a compound represented by the following general formula (3-2), and a compound represented by the following general formula (3-3).

[Chem. 3]

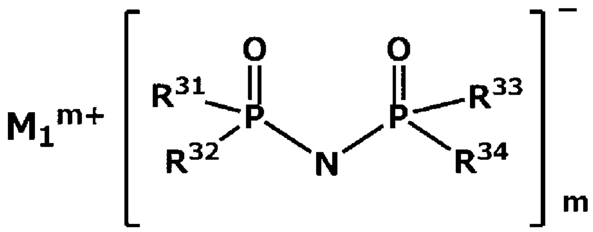

(3-1)

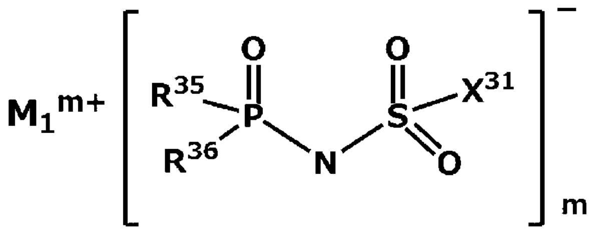

(3-2)

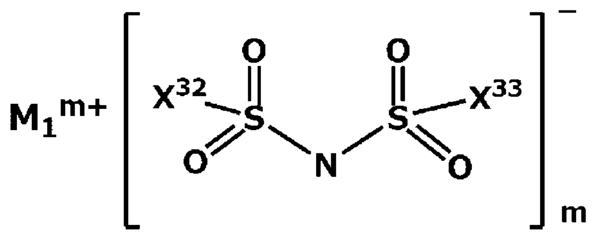

(3-3)

In the general formulae (3-1) to (3-3), $R^{31}$ to $R^{36}$ are each independently a fluorine atom or an organic group selected from the group consisting of an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms. In the organic group, a fluorine atom, an oxygen atom, and/or an unsaturated bond may be present.

$X^{31}$ to $X^{33}$ are each independently a fluorine atom or an organic group selected from the group consisting of an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms. In the organic group, a fluorine atom, an oxygen atom, and/or an unsaturated bond may be present.

The general formula (3-1) includes at least one P-F bond. The general formula (3-2) includes at least one of a P-F

bond and an S-F bond. The general formula (3-3) includes at least one S-F bond.

$M_1^{m+}$ is a proton, a metal cation, or an onium cation. m represents a valence of the corresponding cation.

A compound (4): at least one compound selected from the group consisting of a compound represented by the following general formula (4-1) and a compound represented by the following general formula (4-2).

[Chem. 4]

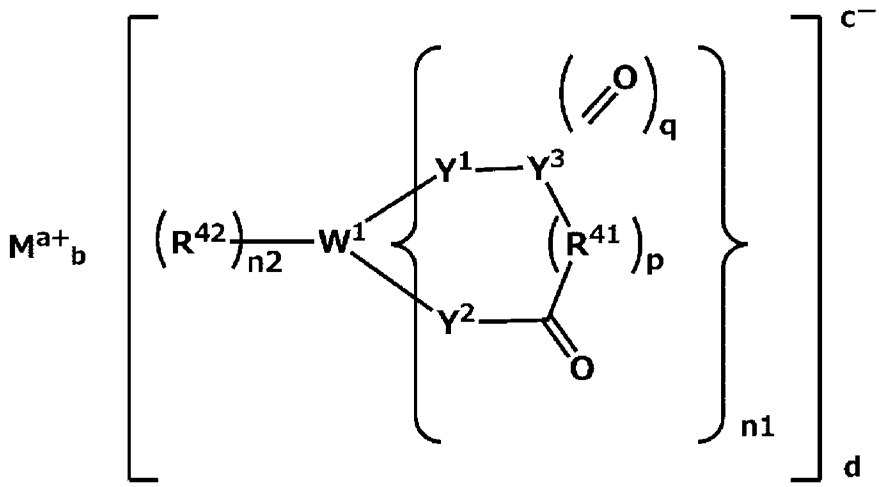

(4-1)

In the general formula (4-1), $W^1$ represents a boron atom, a phosphorus atom, or a silicon atom. n1 is 0 to 3. n2 is 0 to 4. p is 0 or 1. $R^{41}$ represents an alkylene group having 1 to 10 carbon atoms, a halogenated alkylene group having 1 to 10 carbon atoms, an arylene group having 6 to 20 carbon atoms, or a halogenated arylene group having 6 to 20 carbon atoms (the groups may contain a substituent or may contain a heteroatom in the structures thereof, and when n1 is 2 or more, the n1 $R^{41}$'s may be bonded to each other), and $R^{42}$ represents a halogen atom. $Y^1$ and $Y^2$ each independently represent an oxygen atom or a sulfur atom, and $Y^3$ represents a carbon atom or a sulfur atom. q oxo group (=O) is bonded to the carbon atom or the sulfur atom represented by $Y^3$. q is 1 when $Y^3$ is a carbon atom, and q is 1 or 2 when $Y^3$ is a sulfur atom. $M^{a+}$ represents an alkali metal cation, an alkaline earth metal cation, or an onium cation, and a represents a valence of the corresponding cation. a to d are each 1 or 2 and satisfy $a \times b = c \times d$.

[Chem. 5]

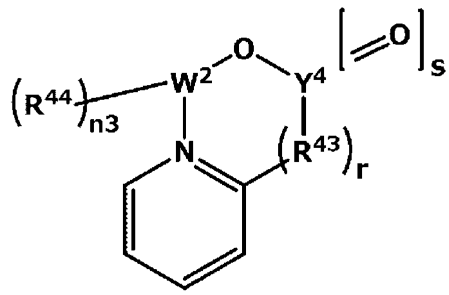

(4-2)

In the general formula (4-2), $R^{43}$ represents an alkylene group having 1 to 10 carbon atoms, a halogenated alkylene group having 1 to 10 carbon atoms, an arylene group having 6 to 20 carbon atoms, or a halogenated arylene group having 6 to 20 carbon atoms (the groups may contain a substituent or may contain a heteroatom in the structures thereof), and r is 0 or 1. $Y^4$ represents a carbon atom or a sulfur atom. s oxo group (=O) is bonded to the carbon atom or the sulfur atom represented by $Y^4$. s is 1 when $Y^4$ is a carbon atom, and s is 1 or 2 when $Y^4$ is a sulfur atom. $W^2$ represents a boron atom or a phosphorus atom, and $R^{44}$ represents a halogen atom. n3 is 2 when $W^2$ is the boron atom, and n3 is 4 when $W^2$ is the phosphorus atom.

A compound (5): a compound represented by the following general formula (5).

[Chem. 6]

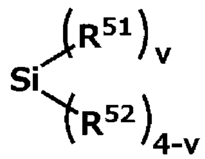

(5)

In the general formula (5), $R^{51}$'s each independently represent a group having a carbon-carbon unsaturated bond. When there are a plurality of $R^{52}$'s, $R^{52}$'s each independently represent a fluorine atom or an alkyl group having 1 to 10 carbon atoms, and the alkyl group may have at least one of a fluorine atom and an oxygen atom. v represents an integer of 2 to 4.

A compound (6): a compound represented by the following general formula (6).

[Chem. 7]

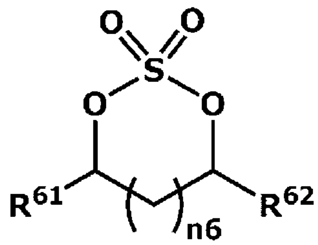

(6)

In the general formula (6), $R^{61}$ and $R^{62}$ each independently represent a hydrogen atom, an alkyl group having 1 or 2 carbon atoms, an alkenyl group having 2 to 5 carbon atoms, or an aryl group having 6 to 10 carbon atoms which may be substituted with an alkyl group. Any hydrogen atom of the alkyl group, the alkenyl group, and the aryl group represented by $R^{61}$ and $R^{62}$ may be substituted with a halogen atom. n6 is 0 or 1.

A compound (7): at least one compound selected from the group consisting of a compound represented by the following general formula (7-1) and a compound represented by the following general formula (7-2).

[Chem. 8]

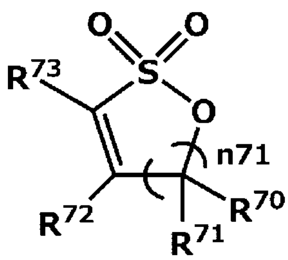

(7-1)

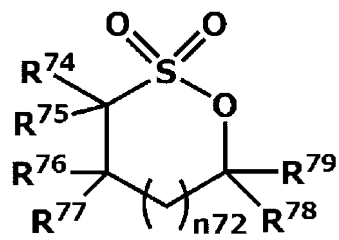

(7-2)

In the general formula (7-1), $R^{70}$ to $R^{73}$ each independently represent a hydrogen atom, a fluorine atom, an alkyl group having 1 to 5 carbon atoms, or a fluoroalkyl group having 1 to 4 carbon atoms. n71 represents an integer of 1 to 3.

In the general formula (7-2), $R^{74}$ to $R^{79}$ each independently represent a hydrogen atom, an alkyl group having 1 to 6 carbon atoms, or a fluoroalkyl group having 1 to 4 carbon atoms. n72 represents an integer of 0 to 2.

A compound (8): a compound represented by the following general formula (8).

[Chem. 9]

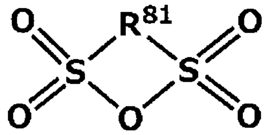

(8)

In the general formula (8), $R^{81}$ represents an alkylene group having 1 to 6 carbon atoms, and an oxygen atom may be included in a carbon atom-carbon atom bond in the alkylene group. Any hydrogen atom of the alkylene group may be substituted with an alkyl group, and any hydrogen atom of the alkylene group and the alkyl group may be substituted with a halogen atom.

A compound (9): a compound represented by the following general formula (9).

[Chem. 10]

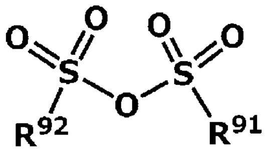

(9)

In the general formula (9), $R^{91}$ and $R^{92}$ each independently represent an alkyl group having 1 to 6 carbon atoms.

[3] The nonaqueous electrolyte solution according to [1] or [2], in which the concentration of the hydrogen fluoride with respect to the total amount of the nonaqueous electrolyte solution is 1 ppm by mass or more and 70 ppm by mass or less.

[4] The nonaqueous electrolyte solution according to any one of [1] to [3], in which a content of the (I) with respect to the total amount of the nonaqueous electrolyte solution is 0.01% by mass or more and 10% by mass or less.

[5] The nonaqueous electrolyte solution according to any one of [1] to [4], in which a content of the (IV) with respect to the total amount of the nonaqueous electrolyte solution is 0.01% by mass or more and 10% by mass or less.

[6] The nonaqueous electrolyte solution according to any one of [1] to [5], in which the compound represented by the general formula (1) is at least one compound selected from the group consisting of diglycolic anhydride, methyldiglycolic anhydride, dimethyldiglycolic anhydride, ethyldiglycolic anhydride, vinyldiglycolic anhydride, tetrafluorodiglycolic anhydride, allyldiglycolic anhydride, thiodiacetic anhydride, and sulfodiacetic anhydride.

[7] The nonaqueous electrolyte solution according to [2], in which the compound (2) is at least one compound selected from the group consisting of lithium difluorophosphate, lithium fluorosulfonate, and lithium trifluoromethanesulfonate.

[8] The nonaqueous electrolyte solution according to [2], in which the compound (3) is at least one compound selected from the group consisting of lithium bis(fluorosulfonyl)imide, lithium (fluorosulfonyl)(difluorophosphoryl)imide, lithium bis(trifluoromethanesulfonyl)imide, lithium bis(difluorophosphoryl)imide, lithium bis(pentafluoroethanesulfonyl)imide, and lithium (fluorosulfonyl)(trifluoromethanesulfonyl)imide.

[9] The nonaqueous electrolyte solution according to [2], in which the compound (4) is at least one compound selected from the group consisting of lithium tetrafluoroborate, lithium bis(oxalato)borate, lithium difluoro(oxalato)borate, lithium tris(oxalato)phosphate, lithium difluorobis(oxalato)phosphate, lithium tetrafluoro(oxalato)phosphate, lithium difluoro(malonato)borate, lithium tetrafluoro(malonato)phosphate, tetrafluoro(picolinato)phosphate, and difluoro(picolinato)borate.

[10] The nonaqueous electrolyte solution according to [2], in which the compound (5) is at least one compound selected from the group consisting of trivinylmethylsilane, trivinylfluorosilane, and tetravinylsilane.

[11] The nonaqueous electrolyte solution according to [2], in which the compound (6) is at least one compound selected from the group consisting of 1,3,2-dioxathiolane-2,2-dioxide and 1,3,2-dioxathiane-2,2-dioxide.

[12] The nonaqueous electrolyte solution according to [2], in which the compound (8) is at least one compound selected from the group consisting of 1,2-ethanedisulfonic anhydride and 1,3-propanedisulfonic anhydride.

[13] The nonaqueous electrolyte solution according to [2], in which the compound (9) is at least one compound selected from the group consisting of methanesulfonic anhydride and ethanesulfonic anhydride.

[14] The nonaqueous electrolyte solution according to any one of [1] to [13], in which the (II) is at least one selected from the group consisting of $LiPF_6$, $LiSbF_6$, $LiAsF_6$, $LiClO_4$, $LiAlO_2$, $LiAlCl_4$, LiCl, and LiI or at least one selected from the group consisting of $NaPF_6$, $NaSbF_6$, $NaAsF_6$, $NaClO_4$, $NaAlO_2$, $NaAlCl_4$, NaCl, and NaI.

[15] The nonaqueous electrolyte solution according to any one of [1] to [14], in which the (III) contains at least one selected from the group consisting of a cyclic ester, a chain ester, a cyclic ether, a chain ether, a sulfone compound, a sulfoxide compound, and an ionic liquid.

[16] The nonaqueous electrolyte solution according to [15], in which the cyclic ester is a cyclic carbonate, and the cyclic carbonate is at least one selected from the group consisting of ethylene carbonate, propylene carbonate, and fluoroethylene carbonate.

[17] The nonaqueous electrolyte solution according to [15] in which the chain ester is a chain carbonate, and the chain carbonate is at least one selected from the group consisting of ethyl methyl carbonate, dimethyl carbonate, diethyl carbonate, and methyl propyl carbonate.

[18] A nonaqueous electrolyte solution battery, at least having: a positive electrode; a negative electrode; a separator;

and the nonaqueous electrolyte solution according to any one of [1] to [17].
[19] A method for decreasing an initial resistance of a nonaqueous electrolyte solution battery including a nonaqueous electrolyte solution, including

using a nonaqueous electrolyte solution containing (I) a compound represented by the following general formula (1), (II) a solute, (III) a nonaqueous organic solvent, and hydrogen fluoride, as the nonaqueous electrolyte solution and

adjusting a concentration of the hydrogen fluoride with respect to a total amount of the nonaqueous electrolyte solution to 0.1 ppm by mass or more and 180 ppm by mass or less.

[Chem. 11]

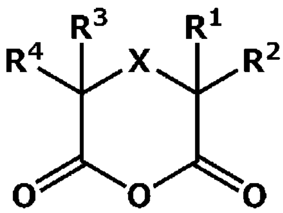

(1)

In the general formula (1), $R^1$ to $R^4$ each independently represent a hydrogen atom, a halogen atom, an alkyl group, an alkenyl group, or an aryl group. X represents an oxygen atom, a sulfur atom, or an $SO_2$ group.

ADVANTAGEOUS EFFECTS OF INVENTION

According to the present disclosure, a nonaqueous electrolyte solution capable of lowering the initial resistance of a nonaqueous electrolyte solution battery and a nonaqueous electrolyte solution battery having low initial resistance can be provided.

DESCRIPTION OF EMBODIMENTS

The term "to" in the present specification is used with the meanings including the numerical values indicated before and after "to" as a lower limit value and an upper limit value.
Hereinafter, the present disclosure will be described in detail, but the description of the constituent elements described below is an example of an embodiment of the present disclosure, and the present disclosure is not limited to these specific contents.

1. Nonaqueous Electrolyte Solution

The nonaqueous electrolyte solution of the present disclosure is

a nonaqueous electrolyte solution containing (I) a compound represented by the following general formula (1), (II) a solute, (III) a nonaqueous organic solvent, and hydrogen fluoride
in which a concentration of the hydrogen fluoride with respect to a total amount of the nonaqueous electrolyte solution is 0.1 ppm by mass or more and 180 ppm by mass or less.

[Chem. 12]

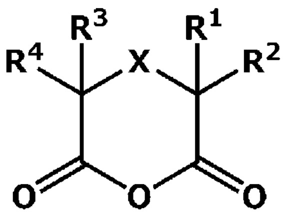

(1)

In the general formula (1), $R^1$ to $R^4$ each independently represent a hydrogen atom, a halogen atom, an alkyl group, an alkenyl group, or an aryl group. X represents an oxygen atom, a sulfur atom, or an $SO_2$ group.

(I) Compound Represented by General Formula (1)

The (I) compound represented by the general formula (1) (also referred to as "(I)") contained in the nonaqueous electrolyte solution of the present disclosure will be explained.
In the general formula (1), $R^1$ to $R^4$ each independently represent a hydrogen atom, a halogen atom, an alkyl group, an alkenyl group, or an aryl group.
Examples of the halogen atom represented by $R^1$ to $R^4$ include a fluorine atom, a chlorine atom, a bromine atom, and an iodine atom.
The alkyl group represented by $R^1$ to $R^4$ may be linear or a branched chain. The alkyl group may be an alkyl group having 1 to 6 carbon atoms, and examples thereof include a methyl group, an ethyl group, an n-propyl group, an isopropyl group, an n-butyl group, a tert-butyl group, an n-pentyl group, and an n-hexyl group. Any hydrogen atom of the alkyl group may be substituted with a halogen atom.
The alkenyl group represented by $R^1$ to $R^4$ may be linear or a branched chain. The alkenyl group may be an alkenyl group having 2 to 6 carbon atoms, and examples thereof include a vinyl group and an allyl group. Any hydrogen atom of the alkenyl group may be substituted with at least one of a halogen atom and an alkyl group.
The aryl group represented by $R^1$ to $R^4$ may be an aryl group having 6 to 20 carbon atoms, and examples thereof include a phenyl group and a naphthyl group. Any hydrogen atom of the aryl group may be substituted with at least one of a halogen atom and an alkyl group.
The compound represented by the general formula (1) may be a compound selected from the group consisting of diglycolic anhydride, methyldiglycolic anhydride, dimethyldiglycolic anhydride, ethyldiglycolic anhydride, vinyldiglycolic anhydride, tetrafluorodiglycolic anhydride, allyldiglycolic anhydride, thiodiacetic anhydride, and sulfodiacetic anhydride.
In the nonaqueous electrolyte solution of the present disclosure, one type of compound may be used alone as (I), or two or more types of compound may be mixed and used in any combination and any ratio according to the application.
The compound represented by the general formula (1) can be produced by various methods.

(II) Solute

The (II) solute (also referred to as "(II)") contained in the nonaqueous electrolyte solution of the present disclosure will be explained.
The (II) solute is not particularly limited and may be, for example, at least one selected from the group consisting of $LiPF_6$, $LiSbF_6$, $LiAsF_6$, $LiClO_4$, $LiAlO_2$, $LiAlCl_4$, LiCl, and LiI or at least one selected from the group consisting of $NaPF_6$, $NaSbF_6$, $NaAsF_6$, $NaClO_4$, $NaAlO_2$, $NaAlCl_4$, NaCl, and NaI.
In the nonaqueous electrolyte solution of the present disclosure, one type of compound may be used alone as (II), or two or more types of compound may be mixed and used in any combination and any ratio according to the application.
The concentration of (II) with respect to the total amount of the nonaqueous electrolyte solution is not particularly restricted. For example, the lower limit of the concentration of (II) may be 0.5 mol/L or more, may be 0.7 mol/L or more, or may be 0.9 mol/L or more. The upper limit of the concentration of (II) may be 5 mol/L or less, may be 4 mol/L or less, or may be 2 mol/L or less.
The liquid temperature for dissolving (II) in (III) a nonaqueous organic solvent is not particularly limited but may be -20 to 80°C or 0 to 60°C.

(III) Nonaqueous Organic Solvent

The (III) nonaqueous organic solvent (also referred to as "(III)") contained in the nonaqueous electrolyte solution of the present disclosure will be explained. The type of the (III) nonaqueous organic solvent is not particularly limited, and any nonaqueous organic solvent can be used.
Specific examples of the (III) nonaqueous organic solvent include the following nonaqueous organic solvents.
Examples of the cyclic ester include cyclic carbonates such as propylene carbonate (hereinafter, sometimes referred to as "PC"), ethylene carbonate (hereinafter, sometimes referred to as "EC"), fluoroethylene carbonate (hereinafter, sometimes referred to as "FEC"), and butylene carbonate, as well as γ-butyrolactone and γ-valerolactone. Here, when the FEC content with respect to the total amount of the nonaqueous electrolyte solution is 10% by mass or less, the FEC is defined as the other additive described later.
Examples of the chain ester include chain carbonates such as diethyl carbonate (hereinafter, sometimes referred to as "DEC"), dimethyl carbonate (hereinafter, sometimes referred to as "DMC"), ethyl methyl carbonate (hereinafter, sometimes referred to as "EMC"), and methyl propyl carbonate, as well as methyl acetate, methyl propionate, and ethyl propionate (hereinafter, sometimes referred to as "EP").
Examples of the cyclic ether include tetrahydrofuran, 2-methyltetrahydrofuran, and dioxane.
Examples of the chain ether include dimethoxyethane and diethyl ether.

Other examples include sulfone compounds and sulfoxide compounds such as dimethyl sulfoxide and sulfolane. In addition, an ionic liquid and the like can also be exemplified.

The (III) nonaqueous organic solvent may contain at least one selected from the group consisting of a cyclic ester, a chain ester, a cyclic ether, a chain ether, a sulfone compound, a sulfoxide compound, and an ionic liquid.

The cyclic ester may be a cyclic carbonate, and the cyclic carbonate may be at least one selected from the group consisting of ethylene carbonate, propylene carbonate, and fluoroethylene carbonate.

The chain ester may be a chain carbonate, and the chain carbonate may be at least one selected from the group consisting of ethyl methyl carbonate, dimethyl carbonate, diethyl carbonate, and methyl propyl carbonate.

In the nonaqueous electrolyte solution of the present disclosure, one type of compound may be used alone as (III), or two or more types of compound may be mixed and used in any combination and any ratio according to the application.

The cyclic carbonate content is not particularly restricted and is any content as long as the effects of the present disclosure are not significantly impaired, but the content in the case where one type is used alone may be 3% by volume or more or may be more preferably 5% by volume or more in 100% by volume of the nonaqueous organic solvent. Within this range, a decrease in the electric conductivity due to a decrease in the permittivity of the nonaqueous electrolyte solution is avoided, and the large current discharge characteristic of the nonaqueous electrolyte solution battery, the stability with respect to the negative electrode, and the cycle characteristic can be easily set in excellent ranges. The content may be 90% by volume or less, may be preferably 85% by volume or less, or may be more preferably 80% by volume or less. Within this range, the viscosity of the nonaqueous electrolyte solution is set in an appropriate range, a decrease in the ionic conductivity is suppressed, and thus the load characteristic of the nonaqueous electrolyte solution battery is easily set in an excellent range.

Moreover, two or more types of cyclic carbonate can be used in any combination. One of preferable combinations is a combination of ethylene carbonate and propylene carbonate. In this case, the volume ratio of ethylene carbonate to propylene carbonate is preferably 99:1 to 40:60 and particularly preferably 95:5 to 50:50. Further, the amount of propylene carbonate in the entire nonaqueous organic solvent is not particularly restricted and is any amount as long as the effects of the present disclosure are not significantly impaired, but the amount may be 1% by volume or more, preferably 2% by volume or more, and more preferably 3% by volume or more and may be 30% by volume or less, preferably 25% by volume or less, and more preferably 20% by volume or less. Propylene carbonate is preferably contained in this range because the low-temperature characteristic is excellent while the characteristics of the combination of ethylene carbonate and a dialkyl carbonate are maintained.

One type of chain ester may be used alone, or two or more types may be used in any combination and any ratio.

The chain ester content is not particularly limited but may be 15% by volume or more, may be preferably 20% by volume or more, or may be more preferably 25% by volume or more in 100% by volume of the nonaqueous organic solvent. The content may be 90% by volume or less, may be preferably 85% by volume or less, or may be more preferably 80% by volume or less. When the chain ester content is in the above range, the viscosity of the nonaqueous electrolyte solution is set in an appropriate range, a decrease in the ionic conductivity is suppressed, and thus the input/output characteristic and the charge-discharge rate characteristic of the nonaqueous electrolyte solution battery are easily set in excellent ranges. In addition, a decrease in the electric conductivity due to a decrease in the permittivity of the nonaqueous electrolyte solution is avoided, and the input/output characteristic and the charge-discharge rate characteristic of the nonaqueous electrolyte solution battery are easily set in excellent ranges.

Further, by combining ethylene carbonate with a specific chain ester in a specific content, the battery performance can be significantly improved.

For example, when dimethyl carbonate and ethyl methyl carbonate are selected as specific chain esters, the ethylene carbonate content is not particularly restricted and is any content as long as the effects of the present disclosure are not significantly impaired, but the content may be 5% by volume or more and preferably 10% by volume or more and may be 45% by volume or less and preferably 40% by volume or less. The dimethyl carbonate content may be 20% by volume or more and preferably 30% by volume or more and may be 50% by volume or less and preferably 45% by volume or less. The ethyl methyl carbonate content may be 20% by volume or more and preferably 30% by volume or more and may be 50% by volume or less and preferably 45% by volume or less. When the contents are within the above ranges, the viscosity of the nonaqueous electrolyte solution is decreased, the ionic conductivity is improved, and high input/output can be obtained even at a low temperature while the low-temperature precipitation temperature of the electrolyte is decreased.

The chain ether content is not particularly restricted and is any content as long as the effects of the present disclosure are not significantly impaired, but the content may be 1% by volume or more, preferably 2% by volume or more, and more preferably 3% by volume or more and may be 30% by volume or less, preferably 25% by volume or less and more preferably 20% by volume or less in 100% by volume of the nonaqueous organic solvent. When the chain ether content is within the above range, it is easy to secure the effect of improving the ionic conductivity of the chain ether due to improvement in the lithium ion dissociation degree and a decrease in the viscosity. When the negative electrode active material is a carbonaceous material, the phenomenon in which the chain ether is co-intercalated with lithium ions can be

suppressed, and thus the input/output characteristic and the charge-discharge rate characteristic can be set in appropriate ranges.

The sulfone compound content is not particularly restricted and is any content as long as the effects of the present disclosure are not significantly impaired, but the content may be 0.3% by volume or more, preferably 0.5% by volume or more, and more preferably 1% by volume or more and may be 40% by volume or less, preferably 35% by volume or less, and more preferably 30% by volume or less in 100% by volume of the nonaqueous organic solvent. When the sulfone compound content is within the above range, the effect of improving the durability such as the cycle characteristic and the storage characteristic can be easily obtained, the viscosity of the nonaqueous electrolyte solution can be set in an appropriate range, a decrease in the electric conductivity can be avoided, and the input/output characteristic and the charge-discharge rate characteristic of the nonaqueous electrolyte solution battery can be set in appropriate ranges.

Concentration of Hydrogen Fluoride

The concentration of hydrogen fluoride with respect to the total amount of the nonaqueous electrolyte solution is 0.1 ppm (parts per million) by mass or more and 180 ppm by mass or less. When the concentration of hydrogen fluoride with respect to the total amount of the nonaqueous electrolyte solution is within the above range, the initial resistance of the nonaqueous electrolyte solution battery can be made low.

The lower limit of the concentration of hydrogen fluoride with respect to the total amount of the nonaqueous electrolyte solution may be 0.5 ppm by mass or more or may be 1 ppm by mass or more. The upper limit of the concentration of hydrogen fluoride with respect to the total amount of the nonaqueous electrolyte solution may be 120 ppm by mass or less, may be 70 ppm by mass or less, or may be 50 ppm by mass or less.

(IV) At Least One Compound Selected from Group Consisting of Compounds (2) to (9)

The nonaqueous electrolyte solution of the present disclosure may further contain (IV) at least one compound selected from the group consisting of the following compounds (2) to (9) (also referred to as "(IV)") . By further containing (IV), the nonaqueous electrolyte solution of the present disclosure can further lower the initial resistance of the nonaqueous electrolyte solution battery.

A compound (2): at least one compound selected from the group consisting of a compound represented by the following general formula (2-1) and a compound represented by the following general formula (2-2).

[Chem. 13]

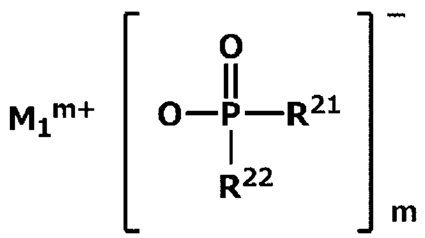

(2-1)

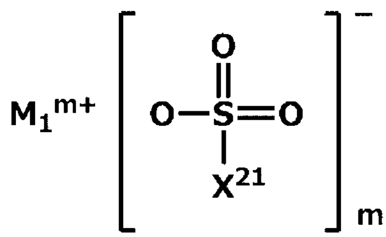

(2-2)

In the general formula (2-1), $R^{21}$ and $R^{22}$ are each independently a fluorine atom or an organic group selected from the group consisting of an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms. In the organic group, a fluorine atom, an oxygen atom, and/or an unsaturated bond may be present. Moreover, the general formula (2-1) includes at least one P-F bond.

In the general formula (2-2), $X^{21}$ is a fluorine atom or an organic group selected from the group consisting of an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms. The organic group may contain at least one fluorine atom. In the organic group, an oxygen atom and/or an unsaturated bond may be present.

In the general formula (2-1) and the general formula (2-2), $M_1^{m+}$ is a proton, a metal cation, or an onium cation. m represents a valence of the corresponding cation.

In the general formula (2-1), the alkoxy group represented by $R^{21}$ and $R^{22}$ may be linear or a branched chain. Examples of the alkoxy group include an alkoxy group and a fluorine-containing alkoxy group, each having 1 to 10 carbon atoms, such as a methoxy group, an ethoxy group, a propoxy group, an isopropoxy group, a butoxy group, a sec-butoxy group, a tert-butoxy group, a pentyloxy group, a trifluoromethoxy group, a 2,2-difluoroethoxy group, a 2,2,2-trifluoroethoxy group, a 2,2,3,3-tetrafluoropropoxy group, a 1,1,1-trifluoroisopropoxy group, and a 1,1,1,3,3,3-hexafluoroisopropoxy group.

The alkenyloxy group represented by $R^{21}$ and $R^{22}$ may be linear or a branched chain. Examples of the alkenyloxy group include an alkenyloxy group and a fluorine-containing alkenyloxy group, each having 2 to 10 carbon atoms, such as a vinyloxy group, a 1-propenyloxy group, a 2-propenyloxy group, an isopropenyloxy group, a 2-butenyloxy group, a 3-butenyloxy group, and a 1,3-butadienyloxy group.

The alkynyloxy group represented by $R^{21}$ and $R^{22}$ may be linear or a branched chain. Examples of the alkynyloxy group include an alkynyloxy group and a fluorine-containing alkynyloxy group, each having 2 to 10 carbon atoms, such as an ethynyloxy group, a 2-propynyloxy group, and a 1,1-dimethyl-2-propynyloxy group.

Examples of the cycloalkoxy group represented by $R^{21}$ and $R^{22}$ include a cycloalkoxy group and a fluorine-containing cycloalkoxy group, each having 3 to 10 carbon atoms, such as a cyclopentyloxy group and a cyclohexyloxy group.

Examples of the cycloalkenyloxy group represented by $R^{21}$ and $R^{22}$ include a cycloalkenyloxy group and a fluorine-containing cycloalkenyloxy group, each having 3 to 10 carbon atoms, such as a cyclopentenyloxy group and a cyclohexenyloxy group.

Examples of the aryloxy group represented by $R^{21}$ and $R^{22}$ include an aryloxy group and a fluorine-containing aryloxy group, each having 6 to 10 carbon atoms, such as a phenyloxy group, a tolyloxy group, and a xylyloxy group.

$R^{21}$ and $R^{22}$ are preferably each independently a fluorine atom or an alkoxy group having a fluorine atom because the ionic conductivity in a solution or a composition increases due to improvement of the ion dissociation degree due to the strong electron-withdrawing property. Furthermore, a fluorine atom is more preferable because the ionic conductivity in a solution or a composition becomes very high due to the effect of improving the mobility due to a decrease in anion size.

Moreover, $R^{21}$ and $R^{22}$ preferably have 6 or less carbon atoms. The number of carbon atoms is preferably 6 or less because the ionic conductivity tends to be relatively high.

In the general formula (2-1), $M_1^{m+}$ represents a proton, a metal cation, or an onium cation. The type thereof is not particularly restricted as long as the performance of the nonaqueous electrolyte solution and the nonaqueous electrolyte solution battery of the present disclosure is not impaired, and various ones can be selected from the above.

When $M_1^{m+}$ represents a metal cation, examples of the metal cation include an alkali metal cation such as a lithium ion, a sodium ion, a potassium ion, a rubidium ion, and a cesium ion, an alkaline earth metal cation such as a magnesium ion, a calcium ion, and a barium ion, a silver ion, a copper ion, and an iron ion.

When $M_1^{m+}$ represents an onium cation, examples of the onium cation include an onium cation such as tetraalkylammonium, tetraalkylphosphonium, and an imidazolium derivative.

m represents the valence of the corresponding cation and may be 1 to 3 or 1 or 2.

$M_1^{m+}$ is preferably a lithium ion, a sodium ion, a potassium ion, a tetramethylammonium ion, a tetraethylammonium ion, a tetrabutylphosphonium ion, or the like particularly from the viewpoint of playing a role of helping the ionic conduction in a nonaqueous electrolyte solution battery.

Moreover, $M_1^{m+}$ is more preferably a lithium ion for use for a lithium ion battery application and is more preferably a sodium ion for use for a sodium ion battery application.

Specific examples of the anion structure of the compound represented by the general formula (2-1) are shown below, but the anion structure is not limited thereto.

[Chem. 14]

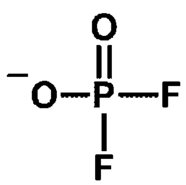

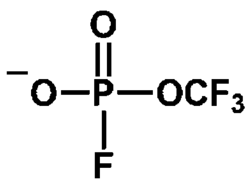

In the general formula (2-2), the alkyl group represented by $X^{21}$ may be linear or a branched chain. Examples of the alkyl group include an alkyl group and a fluorine-containing alkyl group, each having 1 to 10 carbon atoms, such as a methyl group, an ethyl group, a propyl group, an isopropyl group, a n-butyl group, a sec-butyl group, a tert-butyl group, a pentyl group, a trifluoromethyl group, a 2,2-difluoroethyl group, 2,2,2-trifluoroethyl group, a 2,2,3,3-tetrafluoropropyl group, and a 1,1,1,3,3,3-hexafluoroisopropyl group.

The alkenyl group represented by $X^{21}$ may be linear or a branched chain. Examples of the alkenyl group include

an alkenyl group and a fluorine-containing alkenyl group, each having 2 to 10 carbon atoms, such as a vinyl group, a 1-propenyl group, a 2-propenyl group, an isopropenyl group, a 2-butenyl group, a 3-butenyl group, and a 1,3-butadienyl group.

The alkynyl group represented by $X^{21}$ may be linear or a branched chain. Examples of the alkynyl group include an alkynyl group and a fluorine-containing alkynyl group, each having 2 to 10 carbon atoms, such as an ethynyl group, a 2-propynyl group, and a 1,1-dimethyl-2-propynyl group.

Examples of the cycloalkyl group represented by $X^{21}$ include a cycloalkyl group and a fluorine-containing cycloalkyl group, each having 3 to 10 carbon atoms, such as a cyclopentyl group and a cyclohexyl group.

Examples of the cycloalkenyl group represented by $X^{21}$ include a cycloalkenyl group and a fluorine-containing cycloalkenyl group, each having 3 to 10 carbon atoms, such as a cyclopentenyl group and a cyclohexenyl group and examples of the aryl group represented by $X^{21}$ include an aryl group and a fluorine-containing aryl group, each having 6 to 10 carbon atoms, such as a phenyl group, a tolyl group, and a xylyl group.

Examples of the alkoxy group, the alkenyloxy group, the alkynyloxy group, the cycloalkoxy group, the cycloalkenyloxy group, and the aryloxy group represented by $X^{21}$ include the alkoxy group, the alkenyloxy group, the alkynyloxy group, the cycloalkoxy group, the cycloalkenyloxy group, and the aryloxy group represented by $R^{21}$ and $R^{22}$ in the general formula (2-1) described above.

In the general formula (2-2), $X^{21}$ is preferably a fluorine atom or an alkyl group containing a fluorine atom because the ionic conductivity in a solution or a composition increases due to improvement of the ion dissociation degree due to the strong electron-withdrawing property. Furthermore, a fluorine atom is more preferable because the ionic conductivity in a solution or a composition becomes very high due to the effect of improving the mobility due to a decrease in anion size.

Moreover, $X^{21}$ preferably has 6 or less carbon atoms because the ionic conductivity tends to be relatively high. The number of carbon atoms is more preferably 1 to 4, and the number of carbon atoms is further preferably 1 to 3.

Specific examples thereof include a trifluoromethyl group, a trifluoromethoxy group, and a trifluoroethoxy group, and a trifluoromethyl group, which has a small anion size, is particularly preferable.

In the general formula (2-2), $M_1^{m+}$ has the same meaning as $M_1^{m+}$ in the general formula (2-1), and specific examples and preferable examples thereof are also the same.

Specific examples of the anion structure of the compound represented by the general formula (2-2) are shown below, but the anion structure is not limited thereto.

[Chem. 15]

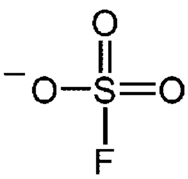

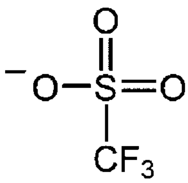

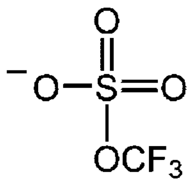

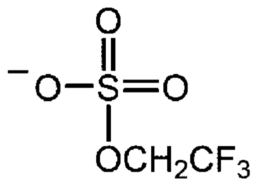

The compound (2) is preferably at least one compound selected from the group consisting of a difluorophosphate, a fluorosulfonate, and a trifluoromethanesulfonate, and more preferably at least one compound selected from the group consisting of lithium difluorophosphate, lithium fluorosulfonate, and lithium trifluoromethanesulfonate.

A compound (3): at least one compound selected from the group consisting of a compound represented by the following general formula (3-1), a compound represented by the following general formula (3-2), and a compound represented by the following general formula (3-3).

[Chem. 16]

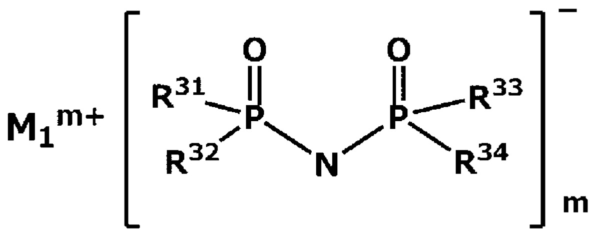

(3-1)

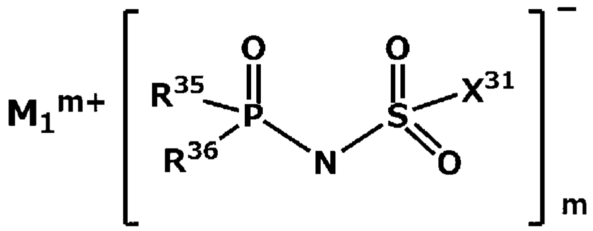

(3-2)

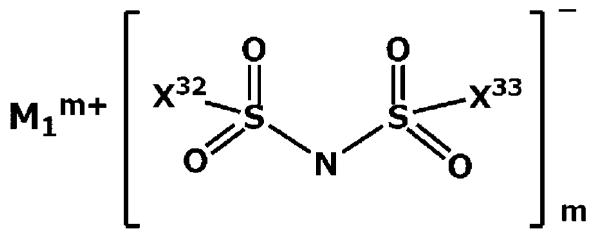

(3-3)

In the general formulae (3-1) to (3-3), $R^{31}$ to $R^{36}$ are each independently a fluorine atom or an organic group selected from the group consisting of an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms. In the organic group, a fluorine atom, an oxygen atom, and/or an unsaturated bond may be present.

$X^{31}$ to $X^{33}$ are each independently a fluorine atom or an organic group selected from the group consisting of an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms. In the organic group, a fluorine atom, an oxygen atom, and/or an unsaturated bond may be present.

The general formula (3-1) includes at least one P-F bond. The general formula (3-2) includes at least one of a P-F bond and an S-F bond. The general formula (3-3) includes at least one S-F bond.

$M_1^{m+}$ is a proton, a metal cation, or an onium cation. m represents a valence of the corresponding cation.

Examples of the alkoxy group, the alkenyloxy group, the alkynyloxy group, the cycloalkoxy group, the cycloalkenyloxy group, and the aryloxy group represented by $R^{31}$ to $R^{36}$ include the alkoxy group, the alkenyloxy group, the alkynyloxy group, the cycloalkoxy group, the cycloalkenyloxy group, and the aryloxy group represented by $R^{21}$ and $R^{22}$ in the general formula (2-1) described above.

$R^{31}$ to $R^{36}$ are each independently preferably a fluorine atom or an alkoxy group having a fluorine atom because the ionic conductivity in a solution or a composition increases due to improvement of the ion dissociation degree due to the strong electron-withdrawing property. Furthermore, a fluorine atom is more preferable because the ionic conductivity in a solution or a composition becomes very high due to the effect of improving the mobility due to a decrease in anion size.

Moreover, $R^{31}$ to $R^{36}$ preferably have 6 or less carbon atoms. The number of carbon atoms is preferably 6 or less because the ionic conductivity tends to be relatively high.

Examples of the alkyl group, the alkenyl group, the alkynyl group, the cycloalkyl group, the cycloalkenyl group, the aryl group, the alkoxy group, the alkenyloxy group, the alkynyloxy group, the cycloalkoxy group, the cycloalkenyloxy group, and the aryloxy group represented by $X^{31}$ to $X^{33}$ include the alkyl group, the alkenyl group, the alkynyl group, the

cycloalkyl group, the cycloalkenyl group, the aryl group, the alkoxy group, the alkenyloxy group, the alkynyloxy group, the cycloalkoxy group, the cycloalkenyloxy group, and the aryloxy group represented by $X^{21}$ in the general formula (2-2) described above.

$X^{31}$ to $X^{33}$ are each preferably a fluorine atom or an alkyl group containing a fluorine atom because the ionic conductivity in a solution or a composition increases due to improvement of the ion dissociation degree due to the strong electron-withdrawing property. Furthermore, a fluorine atom is more preferable because the ionic conductivity in a solution or a composition becomes very high due to the effect of improving the mobility due to a decrease in anion size.

Moreover, $X^{31}$ to $X^{33}$ preferably have 6 or less carbon atoms because the ionic conductivity tends to be relatively high. The number of carbon atoms is more preferably 1 to 4, and the number of carbon atoms is further preferably 1 to 3. Specific examples thereof include a trifluoromethyl group and a pentafluoroethyl group, and a trifluoromethyl group, which has a small anion size, is particularly preferable.

In the general formulae (3-1) to (3-3), $M_1^{m+}$ has the same meaning as $M_1^{m+}$ in the general formula (2-1), and specific examples and preferable examples thereof are also the same.

Specific examples of the anion structure of the compound represented by any of the general formulae (3-1) to (3-3) are shown below, but the anion structure is not limited thereto.

[Chem. 17]

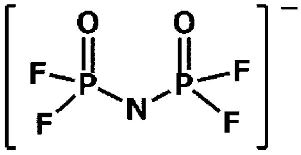

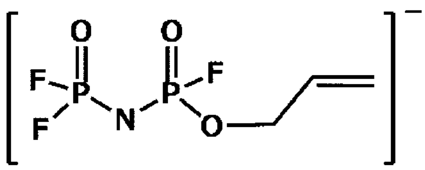

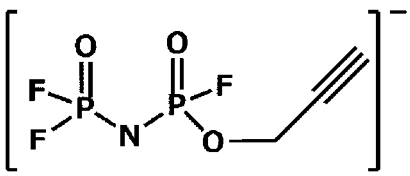

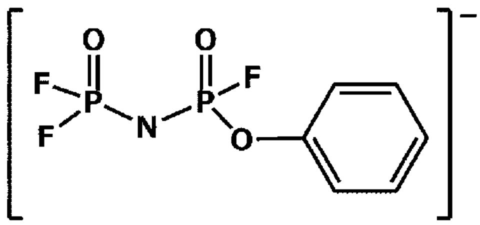

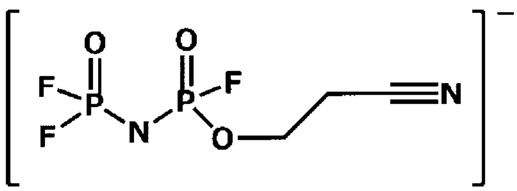

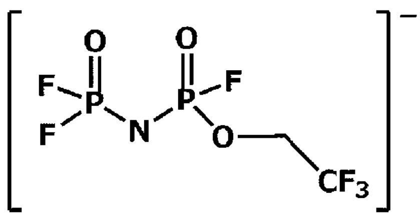

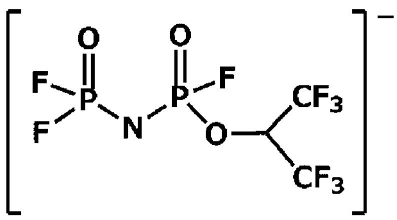

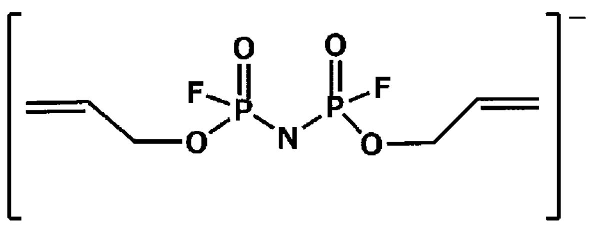

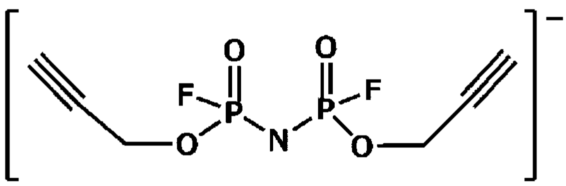

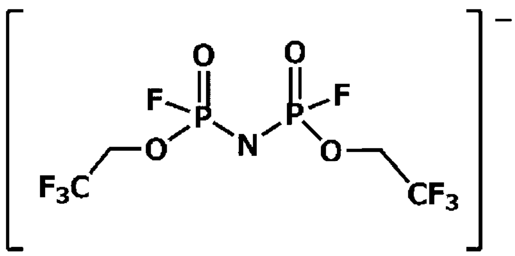

[Chem. 18]

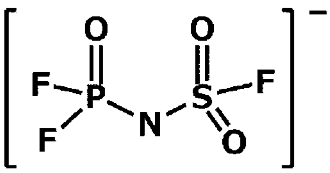

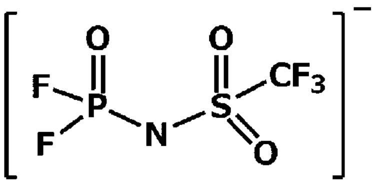

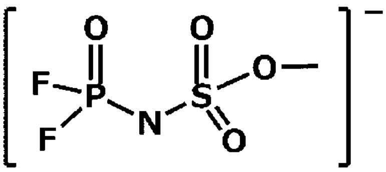

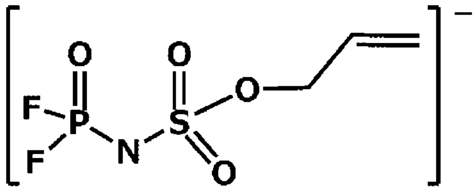

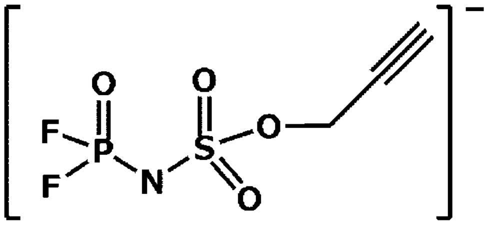

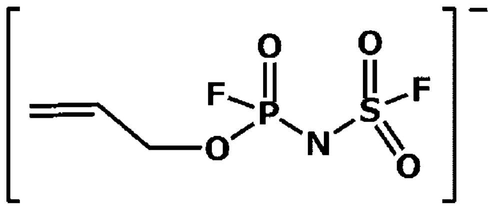

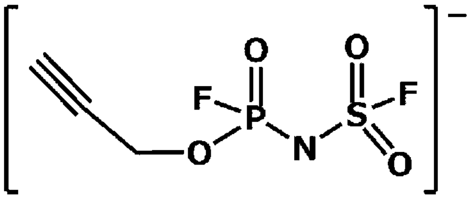

[Chem. 19]

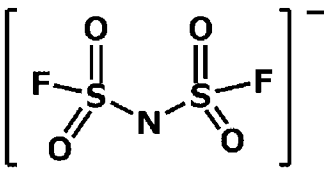

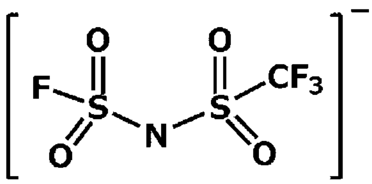

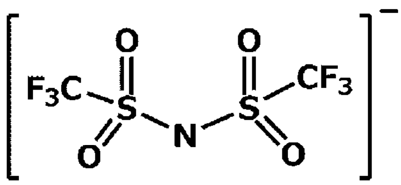

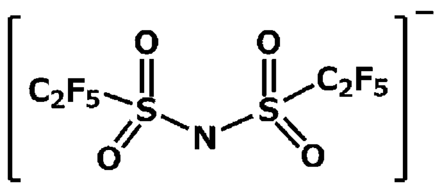

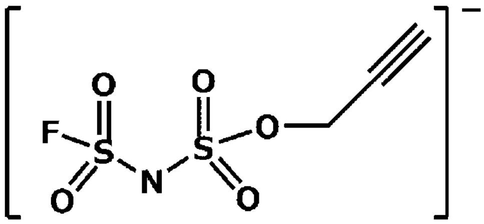

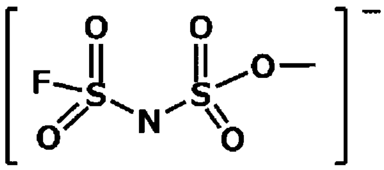

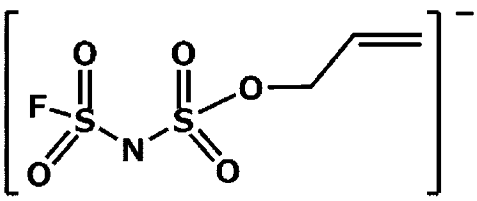

The compound (3) is preferably at least one compound selected from the group consisting of a bis(fluorosulfonyl)imide salt, a (fluorosulfonyl)(difluorophosphoryl)imide salt, a bis(trifluoromethanesulfonyl)imide salt, a bis(difluorophosphoryl)imide salt, a bis(pentafluoroethanesulfonyl)imide salt, and a (fluorosulfonyl)(trifluoromethanesulfonyl)imide salt, and more preferably at least one compound selected from the group consisting of lithium bis(fluorosulfonyl)imide, lithium (fluorosulfonyl)(difluorophosphoryl)imide, lithium bis(trifluoromethanesulfonyl)imide, lithium bis(difluorophosphoryl)imide, lithium bis(pentafluoroethanesulfonyl)imide, and lithium (fluorosulfonyl)(trifluoromethanesulfonyl)imide.

A compound (4): at least one compound selected from the group consisting of a compound represented by the following general formula (4-1) and a compound represented by the following general formula (4-2).

[Chem. 20]

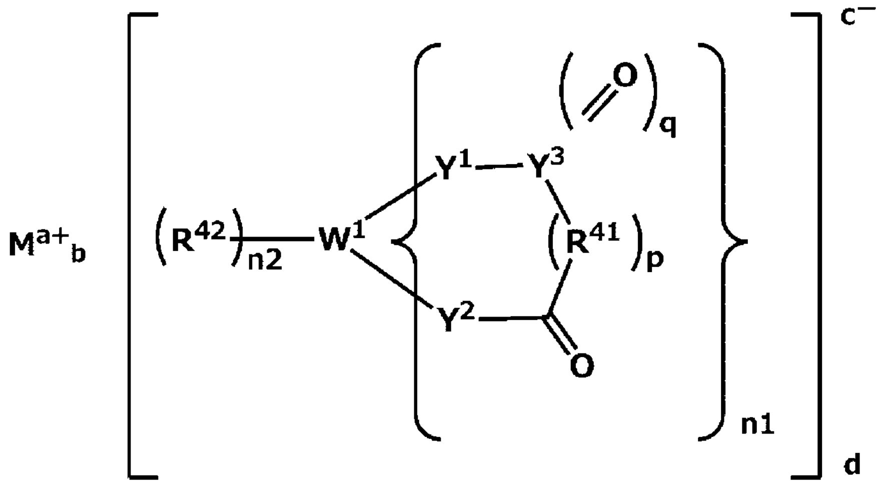

**(4-1)**

In the general formula (4-1), $W^1$ represents a boron atom, a phosphorus atom, or a silicon atom. n1 is 0 to 3. n2 is 0 to 4. p is 0 or 1. $R^{41}$ represents an alkylene group having 1 to 10 carbon atoms, a halogenated alkylene group having 1 to 10 carbon atoms, an arylene group having 6 to 20 carbon atoms, or a halogenated arylene group having 6 to 20 carbon atoms (the groups may contain a substituent or may contain a heteroatom in the structures thereof, and when n1 is 2 or more, the n1 $R^{41}$'s may be bonded to each other), and $R^{42}$ represents a halogen atom. $Y^1$ and $Y^2$ each independently represent an oxygen atom or a sulfur atom, and $Y^3$ represents a carbon atom or a sulfur atom. q oxo group (=O) is bonded to the carbon atom or the sulfur atom represented by $Y^3$. q is 1 when $Y^3$ is a carbon atom, and q is 1 or 2 when $Y^3$ is a sulfur atom. $M^{a+}$ represents an alkali metal cation, an alkaline earth metal cation, or an onium cation, and a represents the valence of the corresponding cation. a to d are each 1 or 2 and satisfy $a \times b = c \times d$.

$W^1$ represents a boron atom, a phosphorus atom, or a silicon atom and is preferably a boron atom or a phosphorus atom.

The alkylene group represented by $R^{41}$ may be linear or a branched chain. Examples of the alkylene group include an alkylene group having 1 to 10 carbon atoms, such as a methylene group, an ethylene group, an n-propylene group, an isopropylene group, an n-butylene group, and an n-hexylene group.

Examples of the halogenated alkylene group having 1 to 10 carbon atoms represented by $R^{41}$ include a group in which any hydrogen atom of the alkylene group is substituted with a halogen atom.

Examples of the arylene group having 6 to 20 carbon atoms represented by $R^{41}$ include a phenylene group and a naphthylene group.

Examples of the halogenated arylene group having 6 to 20 carbon atoms represented by $R^{41}$ include a group in which any hydrogen atom of the arylene group is substituted with a halogen atom.

$R^{41}$ is preferably a methylene group, an ethylene group, an n-propylene group, a difluoromethylene group, a tetrafluoroethylene group, or a hexafluoropropylene group, and more preferably a methylene group.

Examples of the halogen atom represented by $R^{42}$ include a fluorine atom, a chlorine atom, and an iodine atom, and a fluorine atom is preferable.

$Y^1$ and $Y^2$ each independently represent an oxygen atom or a sulfur atom, and it is preferable that both are oxygen atoms.

$Y^3$ represents a carbon atom or a sulfur atom and is preferably a carbon atom.

Examples of the alkali metal cation, the alkaline earth metal cation, and the onium cation represented by $M^{a+}$ include the alkali metal cations, the alkaline earth metal cations, and the onium cations listed as $M_1^{m+}$ in the general formula (2-1) described above, and specific examples and preferable examples thereof are also the same.

Examples of the compound represented by the general formula (4-1) include a tetrafluoroborate, a bis(oxalato) borate, a difluoro(oxalato)borate, a tris(oxalato)phosphate, a difluorobis(oxalato)phosphate, a tetrafluoro(oxalato)phosphate, a tris(oxalato)silicate, a difluorobis(oxalato)silicate, a difluoro(malonato)borate, a tetrafluoro(malonato)phosphate, a difluoro(sulfoacetato)borate, a difluoro(maleato)borate, and a difluoro(fumarato)borate.

The compound (4) is preferably at least one compound selected from the group consisting of a tetrafluoroborate, a bis(oxalato)borate, a difluoro(oxalato)borate, a tris(oxalato)phosphate, a difluorobis(oxalato)phosphate, a tetrafluoro(oxalato)phosphate, a difluoro(malonato)borate, and a tetrafluoro(malonato)phosphate, and more preferably at least one compound selected from the group consisting of lithium tetrafluoroborate, lithium bis(oxalato)borate, lithium difluoro(oxalato)borate, lithium tris(oxalato)phosphate, lithium difluorobis(oxalato)phosphate, lithium tetrafluoro(oxala-

to)phosphate, lithium difluoro(malonato)borate, and lithium tetrafluoro(malonato)phosphate.

[Chem. 21]

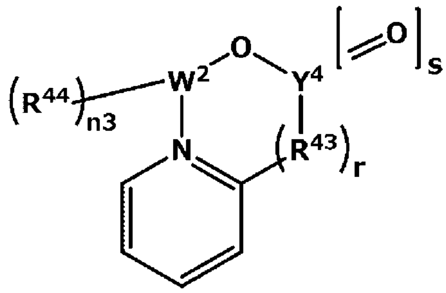

(4-2)

In the general formula (4-2), $R^{43}$ represents an alkylene group having 1 to 10 carbon atoms, a halogenated alkylene group having 1 to 10 carbon atoms, an arylene group having 6 to 20 carbon atoms, or a halogenated arylene group having 6 to 20 carbon atoms (the groups may contain a substituent or may contain a heteroatom in the structures thereof), and r is 0 or 1. $Y^4$ represents a carbon atom or a sulfur atom. s oxo group (=O) is bonded to the carbon atom or the sulfur atom represented by $Y^4$. s is 1 when $Y^4$ is a carbon atom, and s is 1 or 2 when $Y^4$ is a sulfur atom. $W^2$ represents a boron atom or a phosphorus atom, and $R^{44}$ represents a halogen atom. n3 is 2 when $W^2$ is the boron atom, and n3 is 4 when $W^2$ is the phosphorus atom.

The alkylene group represented by $R^{43}$ may be linear or a branched chain. Examples of the alkylene group include an alkylene group having 1 to 10 carbon atoms, such as a methylene group, an ethylene group, an n-propylene group, an isopropylene group, an n-butylene group, and an n-hexylene group.

Examples of the halogenated alkylene group having 1 to 10 carbon atoms represented by $R^{43}$ include a group in which any hydrogen atom of the alkylene group is substituted with a halogen atom.

Examples of the arylene group having 6 to 20 carbon atoms represented by $R^{43}$ include a phenylene group and a naphthylene group.

Examples of the halogenated arylene group having 6 to 20 carbon atoms represented by $R^{43}$ include a group in which any hydrogen atom of the arylene group is substituted with a halogen atom.

$R^{43}$ is preferably a methylene group, an ethylene group, an n-propylene group, a difluoromethylene group, a tetrafluoroethylene group, or a hexafluoropropylene group, and more preferably a methylene group.

Examples of the halogen atom represented by $R^{44}$ include a fluorine atom, a chlorine atom, and an iodine atom, and a fluorine atom is preferable.

$Y^4$ represents a carbon atom or a sulfur atom and is preferably a carbon atom.

Examples of the compound represented by the general formula (4-2) include the following compounds (4-2-a) to (4-2-d), and the compound (4-2-a) is preferable.

[Chem. 22]

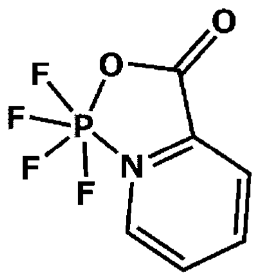
(4-2-a)

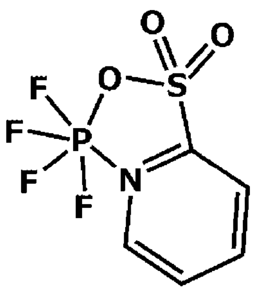
(4-2-b)

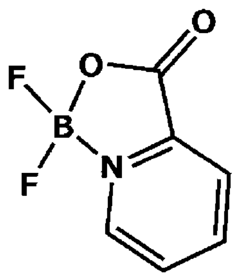
(4-2-c)

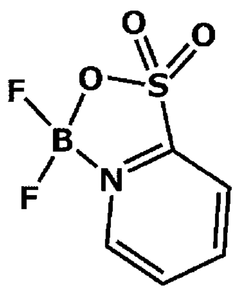
(4-2-d)

A compound (5): a compound represented by the following general formula (5).

[Chem. 23]

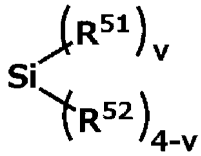

(5)

In the general formula (5), $R^{51}$'s each independently represent a group having a carbon-carbon unsaturated bond. When there are a plurality of $R^{52}$'s, $R^{52}$'s each independently represent a fluorine atom or an alkyl group having 1 to 10 carbon atoms, and the alkyl group may have at least one of a fluorine atom and an oxygen atom. v represents an integer of 2 to 4.

The group having a carbon-carbon unsaturated bond represented by $R^{51}$ may be linear or a branched chain. Examples of the group having a carbon-carbon unsaturated bond include an alkenyl group having 2 to 8 carbon atoms, such as a vinyl group, an allyl group, a I-propenyl group, an isopropenyl group, a 2-butenyl group, and a 1,3-butadienyl group, an alkenyloxy group derived from such a group, an alkynyl group having 2 to 8 carbon atoms, such as an ethynyl group, a 2-propynyl group, and a 1,1 dimethyl-2-propynyl group, an alkynyloxy group derived from such a group, an aryl group having 6 to 12 carbon atoms, such as a phenyl group, a tolyl group, and a xylyl group, and an aryloxy group derived from such a group. Moreover, the group may have a fluorine atom and an oxygen atom. Of these, a group containing a carbon-carbon unsaturated bond having 6 or less carbon atoms is preferable. When the number of carbon atoms is 6 or less, the resistance tends to be relatively small when a film is formed on the electrode. Specifically, a group selected from the group consisting of a vinyl group, an allyl group, a I-propenyl group, an ethynyl group, and a 2-propynyl group is preferable.

When there are a plurality of $R^{52}$'s, $R^{52}$'s each independently represent a fluorine atom or an alkyl group having 1 to 10 carbon atoms.

The alkyl group represented by $R^{52}$ may be linear or a branched chain. Examples of the alkyl group include an alkyl group having 1 to 10 carbon atoms, such as a methyl group, an ethyl group, a propyl group, an isopropyl group, an n-butyl group, a sec-butyl group, an isobutyl group, a tert-butyl group, and an n-pentyl group. Moreover, the group may have at least one of a fluorine atom and an oxygen atom.

Of these, a fluorine atom or a group selected from the group consisting of a methyl group, an ethyl group, a propyl group, a 2,2,2-trifluoroethyl group, a 2,2,3,3-tetrafluoropropyl group, a 1,1,1-trifluoroisopropyl group, and a 1,1,1,3,3,3-hexafluoroisopropyl group results in a tendency towards smaller initial resistance when a film is formed on the electrode, which is preferable from the viewpoint of the resulting output characteristic.

In the general formula (5), v represents an integer of 2 to 4 and is preferably 3 or 4 and particularly preferably 4.

Specific examples of the compound represented by the general formula (5) are shown below, but the compound is not limited thereto.

[Chem. 24]

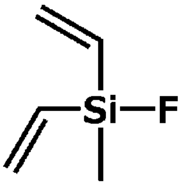
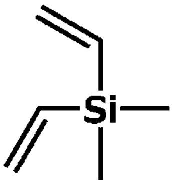
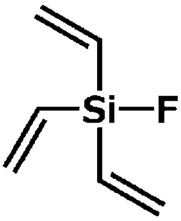
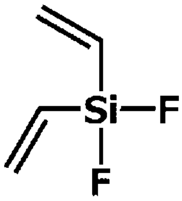
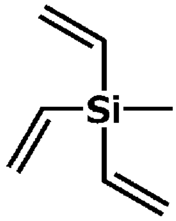
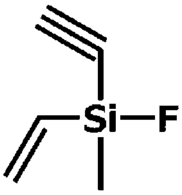
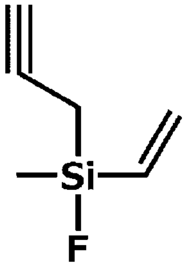
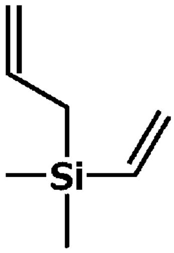
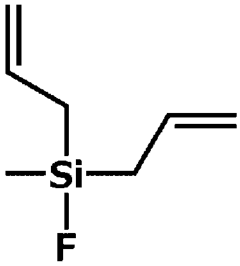
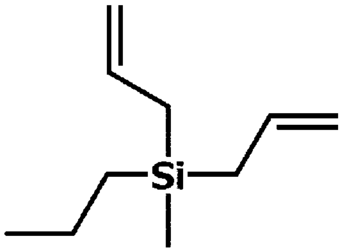
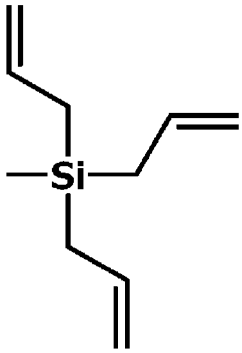
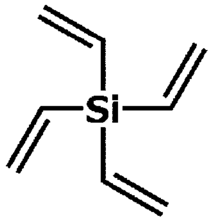
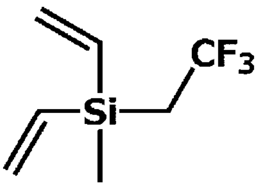
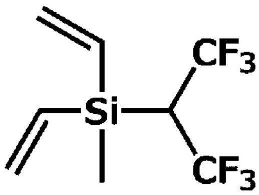
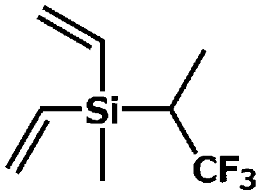
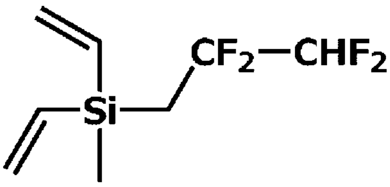
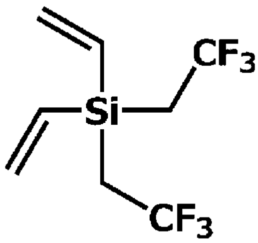
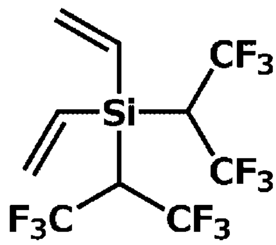

The compound (5) is preferably at least one compound selected from the group consisting of trivinylmethylsilane, trivinylfluorosilane, and tetravinylsilane.

A compound (6): a compound represented by the following general formula (6).

[Chem. 25]

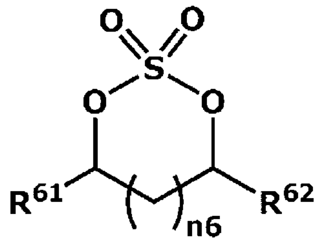

(6)

In the general formula (6), $R^{61}$ and $R^{62}$ each independently represent a hydrogen atom, an alkyl group having 1 or 2 carbon atoms, an alkenyl group having 2 to 5 carbon atoms, or an aryl group having 6 to 10 carbon atoms which may be substituted with an alkyl group. Any hydrogen atom of the alkyl group, the alkenyl group, and the aryl group represented by $R^{61}$ and $R^{62}$ may be substituted with a halogen atom. n6 is 0 or 1.

When $R^{61}$ and $R^{62}$ are each an alkyl group having 1 or 2 carbon atoms, examples of the alkyl group include a methyl group and an ethyl group.

When $R^{61}$ and $R^{62}$ are each an alkenyl group having 2 to 5 carbon atoms, the alkenyl group may be linear or a branched chain. Examples of the alkenyl group include a vinyl group, an allyl group, a l-propenyl group, an isopropenyl group, a 2-butenyl group, and a 1,3-butadienyl group.

When $R^{61}$ and $R^{62}$ are each an aryl group having 6 to 10 carbon atoms which may be substituted with an alkyl group, examples of the aryl group include a phenyl group, a tolyl group, and a xylyl group.

At least any one hydrogen atom of the alkyl group, the alkenyl group, and the aryl group may be substituted with a halogen atom. Examples of the halogen atom include a fluorine atom, a bromine atom, and an iodine atom, and a fluorine atom is preferable.

$R^{61}$ and $R^{62}$ each preferably represent a hydrogen atom.

When n6 is 0, the carbon atom to which $R^{61}$ is bonded and the carbon atom to which $R^{62}$ is bonded are bonded by a single bond.

The compound (6) is preferably at least one compound selected from the group consisting of 1,3,2-dioxathiolane-2,2-dioxide and 1,3,2-dioxathiane-2,2-dioxide.

Specific examples of the compound represented by the general formula (6) are shown below, but the compound is not limited thereto.

[Chem. 26]

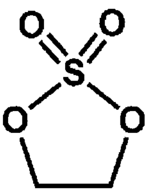
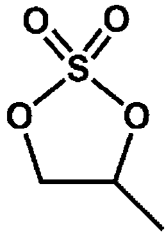
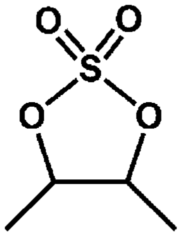
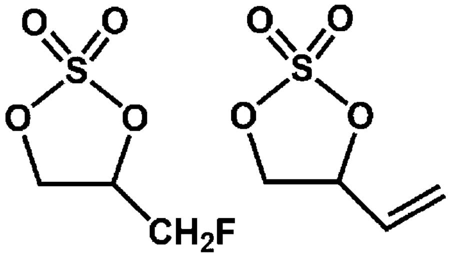

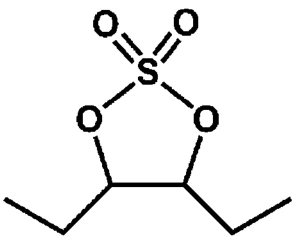
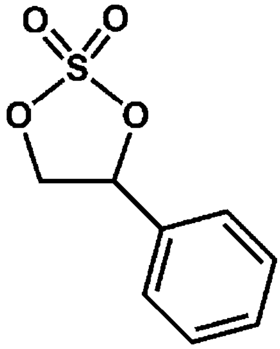
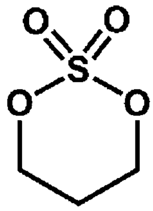
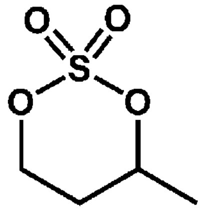

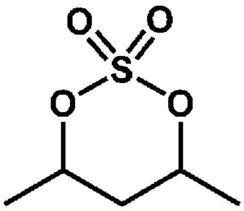
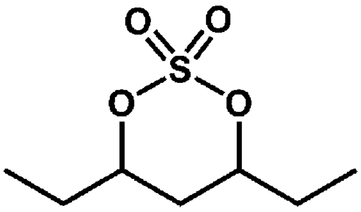
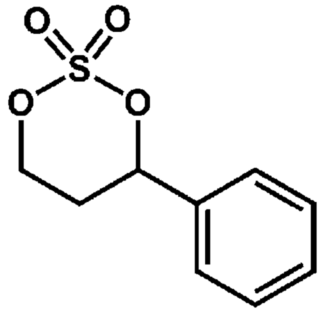

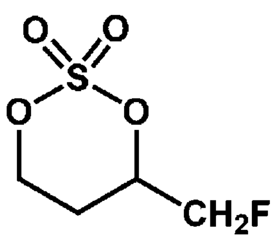
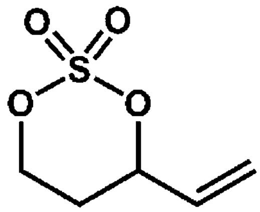

A compound (7): at least one compound selected from the group consisting of a compound represented by the following general formula (7-1) and a compound represented by the following general formula (7-2).

[Chem. 27]

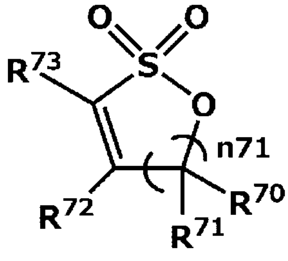
(7-1)

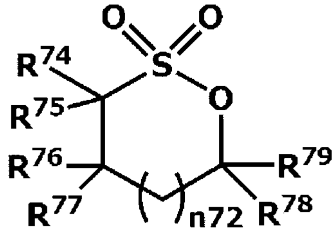
(7-2)

In the general formula (7-1), $R^{70}$ to $R^{73}$ each independently represent a hydrogen atom, a fluorine atom, an alkyl group having 1 to 5 carbon atoms, or a fluoroalkyl group having 1 to 4 carbon atoms. n71 represents an integer of 1 to 3.

In the general formula (7-2), $R^{74}$ to $R^{79}$ each independently represent a hydrogen atom, an alkyl group having 1 to 6 carbon atoms, or a fluoroalkyl group having 1 to 4 carbon atoms. n72 represents an integer of 0 to 2.

In the general formula (7-1), the alkyl group represented by $R^{70}$ to $R^{73}$ may be linear or a branched chain. Examples thereof include an alkyl group having 1 to 5 carbon atoms, such as a methyl group, an ethyl group, a propyl group, an isopropyl group, an n-butyl group, a sec-butyl group, a tert-butyl group, and an n-pentyl group.

The fluoroalkyl group represented by $R^{70}$ to $R^{73}$ may be linear or a branched chain. Examples thereof include a fluoroalkyl group having 1 to 4 carbon atoms, such as a trifluoromethyl group, a 2,2-difluoroethyl group, a 2,2,2-trifluoroethyl group, a 2,2,3,3-tetrafluoropropyl group, and a 1,1,1,3,3,3-hexafluoroisopropyl group.

$R^{70}$ to $R^{73}$ are each preferably a hydrogen atom, a fluorine atom, or a trifluoromethyl group and more preferably a hydrogen atom.

In the general formula (7-1), n71 represents an integer of 1 to 3, may be 1 or 2 and is preferably 1.

Examples of the compound represented by the general formula (7-1) include 1,3-propene sultone (1-propene-1,3-sultone), 1,4-butene sultone, 2,4-pentene sultone, 3,5-pentene sultone, 1-fluoro-1,3-propene sultone, 1-trifluoromethyl-1,3-propene sultone, 1,1,1-trifluoro-2,4-butene sultone, 1,4-butene sultone, and 1,5-pentene sultone.

In the general formula (7-2), the alkyl group represented by $R^{74}$ to $R^{79}$ may be linear or a branched chain. Examples thereof include an alkyl group having 1 to 6 carbon atoms, such as a methyl group, an ethyl group, a propyl group, an isopropyl group, an n-butyl group, a sec-butyl group, a tert-butyl group, an n-pentyl group, and an n-hexyl group.

The fluoroalkyl group represented by $R^{74}$ to $R^{79}$ may be linear or a branched chain. Examples thereof include a fluoroalkyl group having 1 to 4 carbon atoms, such as a trifluoromethyl group, a 2,2-difluoroethyl group, a 2,2,2-trifluoroethyl group, a 2,2,3,3-tetrafluoropropyl group, and a 1,1,1,3,3,3-hexafluoroisopropyl group.

$R^{74}$ to $R^{79}$ are each preferably a hydrogen atom, a fluorine atom, or a trifluoromethyl group and more preferably a hydrogen atom.

In the general formula (7-2), n72 represents an integer of 0 to 2, may be 0 or 1 and is preferably 0.

When n72 is 0, the carbon atom to which $R^{76}$ and $R^{77}$ are bonded and the carbon atom to which $R^{78}$ and $R^{79}$ are bonded are bonded by a single bond.

Examples of the compound represented by the general formula (7-2) include 1,3-propane sultone, α-trifluoromethyl-γ-sultone, (3-trifluoromethyl-γ-sultone, γ-trifluoromethyl-γ-sultone, α-methyl-γ-sultone, α,β-di(trifluoromethyl)-γ-sultone, α,α-di(trifluoromethyl)-γ-sultone, α-heptafluoropropyl-γ-sultone, 1,4-butanesultone, and 1,5-pentanesultone.

The compound (7) is preferably at least one compound selected from the group consisting of 1,3-propane sultone and 1-propene 1,3-sultone.

A compound (8): a compound represented by the following general formula (8).

[Chem. 28]

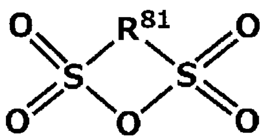

(8)

In the general formula (8), $R^{81}$ represents an alkylene group having 1 to 6 carbon atoms, and an oxygen atom may be included in a carbon atom-carbon atom bond in the alkylene group. Any hydrogen atom of the alkylene group may be substituted with an alkyl group, and any hydrogen atom of the alkylene group and the alkyl group may be substituted with a halogen atom.

The alkylene group having 1 to 6 carbon atoms represented by $R^{81}$ may be linear or a branched chain, and examples thereof include a methylene group, an ethylene group, an n-propylene group, an isopropylene group, an n-butylene group, and a n-hexylene group.

The compound (8) is preferably at least one compound selected from the group consisting of 1,2-ethanedisulfonic anhydride and 1,3-propanedisulfonic anhydride.

A compound (9): a compound represented by the following general formula (9).

[Chem. 29]

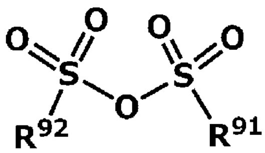

(9)

In the general formula (9), $R^{91}$ and $R^{92}$ each independently represent an alkyl group having 1 to 6 carbon atoms.

The alkyl group having 1 to 6 carbon atoms represented by $R^{91}$ and $R^{92}$ may be linear or a branched chain, and examples thereof include a methyl group, an ethyl group, a propyl group, an isopropyl group, an n-butyl group, a sec-butyl group, a tert-butyl group, and an n-pentyl group.

The compound (9) is preferably at least one compound selected from the group consisting of methanesulfonic anhydride and ethanesulfonic anhydride.

In the nonaqueous electrolyte solution of the present disclosure, one type of compound may be used alone as (IV), or two or more types of compounds may be mixed and used in any combination and any ratio according to the application.

In the nonaqueous electrolyte solution of the present disclosure, the content of (I) with respect to the total amount of the nonaqueous electrolyte solution (also referred to as "concentration of (I)") may be 0.01% by mass or more and 10% by mass or less. The lower limit of the concentration of (I) may be 0.08% by mass or more, may be 0.3% by mass or more, or may be 0.8% by mass or more. The upper limit of the concentration of (I) may be 8% by mass or less, may be 5% by mass or less, may be 4% by mass or less, may be 3% by mass or less, or may be 1.5% by mass or less.

In the nonaqueous electrolyte solution of the present disclosure, the content of (IV) with respect to the total amount of the nonaqueous electrolyte solution (also referred to as "concentration of (IV)") may be 0.01% by mass or more and 10% by mass or less. The lower limit of the concentration of (IV) may be 0.08% by mass or more, may be 0.1% by mass or more, or may be 0.2% by mass or more. The upper limit of the concentration of (IV) may be 8% by mass or less, may be 6% by mass or less, or may be 5% by mass or less.

Here, the content of $LiN(CF_3SO_2)_2$, $LiN(FSO_2)_2$, $LiN(POF_2)_2$, $LiCF_3SO_3$, $LiC_4F_9SO_3$, $NaN(CF_3SO_2)_2$, $NaN(FSO_2)_2$, $NaN(POF_2)_2$, $NaCF_3SO_3$, or $NaC_4F_9SO_3$ with respect to the total amount of the nonaqueous electrolyte solution may be 0.01% by mass or more and 20% by mass or less.

Other Additives

The basic configuration of the nonaqueous electrolyte solution of the present disclosure has been described above, but an additive which is generally used or the like may be added to the nonaqueous electrolyte solution of the present disclosure at any ratio as long as the gist of the present disclosure is not impaired.

When the nonaqueous electrolyte solution of the present disclosure contains another additive, the other additive content may be 0.01% by mass or more and 10.0% by mass or less with respect to the total amount of the nonaqueous electrolyte solution.

Specific examples of the other additive include vinylene carbonate (hereinafter, sometimes referred to as "VC"), an oligomer of vinylene carbonate (number average molecular weight in terms of polystyrene is 170 to 5000), fluoroethylene carbonate, trans-difluoroethylene carbonate, 1,6-diisocyanatohexane, ethynyl ethylene carbonate, methylene methane disulfonate, methane sulfonyl fluoride, tris(trimethylsilyl)borate, (ethoxy)pentafluorocyclotriphosphazene, 1,3-dimethyl-1,3-divinyl-1,3-di(1,1,1,3,3,3-hexafluoroisopropyl)disiloxane, tert-butylbenzene, tert-amylbenzene, fluorobenzene, cyclohexylbenzene, biphenyl, difluoroanisole, dimethylvinylene carbonate, and nitrate.

By adding the additive to the nonaqueous electrolyte solution of the present disclosure, at least one of the overcharge prevention effect, the negative electrode film formation effect, and the positive electrode protection effect may be improved.

The nonaqueous electrolyte solution of the present disclosure is suitably used for a nonaqueous electrolyte solution battery (preferably a nonaqueous electrolyte solution secondary battery).

2. Nonaqueous Electrolyte Solution Battery

The nonaqueous electrolyte solution battery of the present disclosure includes at least the nonaqueous electrolyte solution of the present disclosure described above, a negative electrode, and a positive electrode. Further, a separator, an exterior body, and the like may be included.

The nonaqueous electrolyte solution battery of the present disclosure preferably includes at least a positive electrode, a negative electrode, a separator, and the nonaqueous electrolyte solution of the present disclosure.

The nonaqueous electrolyte solution battery of the present disclosure is preferably a nonaqueous electrolyte solution secondary battery.

The negative electrode is not particularly limited, but a material capable of reversibly intercalating and deintercalating alkali metal ions such as lithium ions and sodium ions or alkaline earth metal ions may be used.

For example, in the case of a lithium ion secondary battery in which cations are mainly lithium, the negative electrode active material constituting the negative electrode is one capable of doping and dedoping lithium ions. Examples of the negative electrode active material include a material containing at least one selected from a carbon material in which the d value of the lattice plane (002) plane in X-ray diffraction is 0.340 nm or less, a carbon material in which the d value of the lattice plane (002) plane in X-ray diffraction exceeds 0.340 nm, oxides of one or more metals selected from Si, Sn, and

Al, one or more metals selected from Si, Sn, and Al, alloys containing these metals, alloys of the metals or the alloys and lithium, and lithium titanium oxide. One type of these negative electrode active materials can be used alone, or two or more types thereof can be used in combination. Lithium metal, a metal nitride, a tin compound, a conductive polymer, and the like may also be used.

For example, in the case of a sodium ion secondary battery in which the cations are mainly sodium, as the negative electrode active material constituting the negative electrode, sodium metal, an alloy of sodium metal and another metal such as tin, an intermetallic compound of sodium metal and another metal, various carbon materials such as hard carbon, a metal oxide such as titanium oxide, a metal nitride, (elemental) tin, a tin compound, activated carbon, a conductive polymer, and the like may be used. In addition to these, (elemental) phosphorus such as red phosphorus and black phosphorus, phosphorus compounds such as Co-P, Cu-P, Sn-P, Ge-P, and Mo-P, (elemental) antimony, antimony compounds such as Sb/C and Bi-Sb, and the like may be used. One type of these negative electrode active materials may be used alone, or two or more types thereof may be used in combination.

The positive electrode is not particularly limited, but a material capable of reversibly intercalating and deintercalating alkali metal ions such as lithium ions and sodium ions or alkaline earth metal ions may be used.

For example, when the cation is lithium, lithium-containing transition metal oxide composites such as $LiCoO_2$, $LiNiO_2$, $LiMnO_2$, and $LiMn_2O_4$, lithium-containing transition metal oxide composites including a mixture of a plurality of transition metals in the lithium-containing transition metal oxide composites such as Co, Mn, and Ni, lithium-containing transition metal oxide composites in which a part of the transition metals in the lithium-containing transition metal oxide composites is substituted with a metal other than the transition metals, phosphate compounds of transition metals such as $LiFePO_4$, $LiCoPO_4$, and $LiMnPO_4$ referred to as olivine, oxides such as $TiO_2$, $V_2O_3$, and $MoO_3$, sulfides such as $TiS_2$ and FeS, conductive polymers such as polyacetylene, polyparaphenylene, polyaniline, and polypyrrole, activated carbon, radical-generating polymers, carbon materials, and the like may be used as a positive electrode material.

Specific examples thereof include $Li[Ni_{1/3}Mn_{1/3}Co_{1/3}]O_2$, $Li[Ni_{0.43}Mn_{0.35}Co_{0.2}]O_2$, $Li[Ni_{0.5}Mn_{0.3}Co_{0.2}]O_2$, $Li[Ni_{0.6}Mn_{0.2}Co_{0.2}]O_2$, $Li[Ni_{0.8}Mn_{0.1}Co_{0.1}]O_2$ (hereinafter, sometimes referred to as "NCM811"), $Li[Ni_{0.49}Mn_{0.3}Co_{0.2}Zr_{0.01}]O_2$, $Li[Ni_{0.49}Mn_{0.3}Co_{0.2}Mg_{0.01}]O_2$, $LiNi_{0.8}Co_{0.2}O_2$, $LiNi_{0.85}Co_{0.10}Al_{0.05}O_2$, $LiNi_{0.87}Co_{0.10}Al_{0.03}O_2$, $LiNi_{0.90}Co_{0.07}Al_{0.03}O_2$, $LiNi_{0.6}Co_{0.3}Al_{0.1}O_2$, and $LiMn_{1.3}Ni_{0.5}O_4$.

For example, when the cation is sodium, sodium-containing transition metal oxide composites such as $NaCrO_2$, $NaFe_{0.5}Co_{0.5}O_2$, $NaFe_{0.4}Mn_{0.3}Ni_{0.3}O_2$, $NaNi_{0.3}Ti_{0.3}Mn_{0.2}O_2$, $NaNi_{1/3}Ti_{1/3}Mn_{1/3}O_2$, $NaNi_{0.33}Ti_{0.33}Mn_{0.16}Mg_{0.17}O_2$, $Na_{2/3}Ni_{1/3}Ti_{1/6}Mn_{1/2}O_2$, and $Na_{2/3}Ni_{1/3}Mn_{2/3}O_2$, sodium-containing transition metal oxide composites including a mixture of a plurality of transition metals in the sodium-containing transition metal oxide composites such as Co, Mn, and Ni, sodium-containing transition metal oxide composites in which a part of the transition metals in the sodium-containing transition metal oxide composites is substituted with a metal other than the transition metals, polyanion type compounds such as $NaFePO_4$, $NaVPO_4F$, $Na_3V_2(PO_4)_3$, and $Na_2Fe_2(SO_4)_3$, sodium salts of Prussian Blue analogues represented by a compositional formula $Na_aM_b[Fe(CN)_6]_c$ (M represents Cr, Mn, Fe, Co, Ni, Cu, or Zn, $0 \leq a \leq 2$, $0.5 \leq b \leq 1.5$, and $0.5 \leq c \leq 1.5$), oxides such as $TiO_2$, $V_2O_3$, and $MoO_3$, sulfides such as $TiS_2$ and FeS, conductive polymers such as polyacetylene, polyparaphenylene, polyaniline, and polypyrrole, activated carbon, radical-generating polymers, carbon materials, and the like may be used as a positive electrode material (positive electrode active material).

Acetylene black, Ketjen black, carbon fibers, or graphite as a conductive material and polytetrafluoroethylene, polyvinylidene fluoride, SBR resin, or the like as a binder may be added to the positive electrode and negative electrode materials, and an electrode sheet molded into a sheet shape may also be used.

As a separator for preventing contact between the positive electrode and the negative electrode, a nonwoven fabric or a porous sheet made of polypropylene, polyethylene, paper, glass fibers, or the like may be used.

An electrochemical device having a shape such as a coin shape, a cylindrical shape, a square shape, or an aluminum laminate sheet shape is assembled with the above elements.

## EXAMPLES

Hereinafter, the present disclosure will be specifically explained with Examples, but the present disclosure is not limited by these Examples.

### [Examples 1-1 to 1-41 and Comparative Examples 1-1 to 1-37]

### <Preparation of Nonaqueous Electrolyte Solution>

EC, EMC, and DMC were mixed as (III) in a volume ratio of EC:EMC:DMC = 25:50:25 in a glove box with a dew point of -60°C or lower. Then, while maintaining the internal temperature at 40°C or lower and stirring, $LiPF_6$ as (II) was added and dissolved at a concentration of 1.0 mol/L with respect to the total amount of the nonaqueous electrolyte solution, and the compound (1-1) as (I) was added and dissolved at a concentration of 1.0% by mass with respect to the total amount

of the nonaqueous electrolyte solution. Next, a predetermined amount of pure water was added to generate hydrogen fluoride in the nonaqueous electrolyte solution, and the solution was stirred for one hour to prepare the nonaqueous electrolyte solution of Comparative Example 1-1.

In addition, as shown in Tables 1 to 5, the nonaqueous electrolyte solutions of the Examples and the Comparative Examples were prepared by the same procedure as that of the nonaqueous electrolyte solution of Comparative Example 1-1 except that the type and the concentration of (I) were changed, the concentration of hydrogen fluoride was changed by the addition of water content, and the type and the concentration of (IV) were changed.

The concentration of hydrogen fluoride was measured by titration using a triethylamine/acetone solution 24 hours after the preparation of the nonaqueous electrolyte solution. In all the Examples and the Comparative Examples, it was checked with a Karl Fischer moisture meter that no water remained in the nonaqueous electrolyte solution 24 hours after the preparation.

The compounds used in the Examples and the Comparative Examples are shown below. Only the compound numbers are shown in the tables.

(1-1): diglycolic anhydride
(1-2): thiodiacetic anhydride
(1-3): sulfodiacetic anhydride
(2-1): lithium difluorophosphate
(2-2): lithium fluorosulfonate
(2-3): lithium trifluoromethanesulfonate
(2-4): lithium tetrafluoroborate
(3-1): lithium bis(fluorosulfonyl)imide
(3-2): lithium (fluorosulfonyl)(difluorophosphoryl)imide
(3-3): lithium bis(trifluoromethanesulfonyl)imide
(3-4): lithium bis(difluorophosphoryl)imide
(4-1)·lithium bis(oxalato)borate
(4-2): lithium tris(oxalato)phosphate
(4-3): lithium difluorobis(oxalato)phosphate
(5-1): trivinylmethylsilane
(5-2): trivinylfluorosilane
(5-3): tetravinylsilane
(6-1): 1,3,2-dioxathiolane-2,2-dioxide
(7-1): 1,3-propane sultone
(7-2): 1-propene 1,3-sultone
(8-1): 1,2-ethanedisulfonic anhydride
(9-1): methanesulfonic anhydride

(Production of NCM811 Positive Electrode)

In 92.0% by mass of $LiNi_{0.8}Mn_{0.1}Co_{0.1}O_2$ powder, 3.5% by mass of polyvinylidene fluoride (hereinafter also referred to as "PVDF") as a binder and 4.5% by mass of acetylene black as a conductive material were mixed, and 45% by mass of N-methyl-2-pyrrolidone (hereinafter also referred to as "NMP") with respect to the total mass of the $LiNi_{0.8}Mn_{0.1}Co_{0.1}O_2$ powder, the binder, and the conductive material was added to produce a positive electrode mixture paste. The paste was applied onto both sides of an aluminum foil (A1085), dried, pressed and then punched into 4 cm × 5 cm to obtain an NCM811 positive electrode for testing.

(Production of Natural Graphite Negative Electrode)

By mixing 97.0% by mass of natural graphite powder, 2.0% by mass of styrene-butadiene rubber (hereinafter also referred to as "SBR") as a binder, 1.0% by mass of sodium carboxymethyl cellulose (hereinafter also referred to as "CMC"), and water, a negative electrode mixture paste was produced. The paste was applied onto one side of a copper foil, dried, pressed and then punched into 4.5 cm × 5.5 cm to obtain a natural graphite negative electrode for testing.

(Production of Silicon-Containing Graphite Negative Electrode)

In 85.0% by mass of artificial graphite powder, 7.0% by mass of nanosilicon, 3.0% by mass of a conductive material (HS-100 manufactured by Denka Company Limited), 2.0% by mass of carbon nanofiber (VGCF manufactured by Showa Denko K.K.), 2.0% by mass of SBR, 1.0% by mass of CMC, and water were mixed to produce a negative electrode

mixture paste. The paste was applied onto one side of a copper foil, dried, pressed and then punched into 4.5 cm × 5.5 cm to obtain a silicon-containing graphite negative electrode for testing.

(Production of Nonaqueous Electrolyte Solution Batteries Shown in Tables 1 to 5)

Under an argon atmosphere at a dew point of -50°C or lower, a terminal was welded to the above NCM811 positive electrode, and both sides of the welded product were then sandwiched between two polyethylene separators (5 cm × 6 cm). Further, the outside of the sandwiched product was sandwiched between two natural graphite negative electrodes to which a terminal had been welded in advance in such a manner that the surface of the negative electrode active material faced the surface of the positive electrode active material. The resultant product was put in an aluminum laminated bag having an opening on one side, and after the nonaqueous electrolyte solution prepared above was vacuum-injected into the bag, the opening was sealed with heat. In this manner, the aluminum laminated nonaqueous electrolyte solution batteries of the Examples and the Comparative Examples shown in Tables 1 to 5 below were produced.

(Evaluation of Nonaqueous Electrolyte Solution Battery)

-Initial Charge and Discharge-

The produced nonaqueous electrolyte solution battery was put in a constant temperature bath at 25°C and, in this state, connected to a charge and discharge device. The battery was charged to 4.2 V at a current density of 0.38 mA/cm$^2$. After 4.2 V was maintained for one hour, the battery was discharged to 2.5 V at a current density of 0.38 mA/cm$^2$. This was defined as one charge and discharge cycle, and three cycles of charge and discharge in total were performed to stabilize the battery. The discharge capacity in the third cycle was defined as the initial charge-discharge capacity.

<Initial Resistance>

After the initial charge and discharge, the battery was charged to 4.2 V at 25°C and 0.38 mA/cm$^2$, and the resistance value was directly measured by impedance measurement.

<High-Temperature Storage Characteristic>

The nonaqueous electrolyte solution battery after the initial charge and discharge was charged at an upper limit charge voltage of 4.2 V and 0.38 mA/cm$^2$, then taken out of the charge and discharge device maintained at 25°C and stored in a constant temperature bath at 60°C for 14 days. Then, the battery was placed in a charge and discharge device maintained at 25°C and discharged at 0.38 mA/cm$^2$ to a discharge end voltage of 2.5 V, and the discharge capacity retention rate after storage at 60°C was determined by the following equation.

(Discharge Capacity Retention Rate after Storage at 60°C)

Discharge capacity retention rate (%) = (discharge capacity after storage at 60°C/initial charge-discharge capacity) × 100

(Resistance Value after Storage at 60°C)

Next, the battery was charged to 4.2 V at 25°C and 0.38 mA/cm$^2$, and the resistance value was directly measured by impedance measurement.

In Tables 1 to 5 below, the initial resistance values are the relative values based on the value of Comparative Example 1-1 regarded as 100. "E1" indicates the discharge capacity retention rates after storage at 60°C (the relative values based on the value of Comparative Example 1-1 regarded as 100), and "E2" indicates the resistance values after storage at 60°C (the relative values based on the value of Comparative Example 1-1 regarded as 100). The concentrations (ppm) of hydrogen fluoride are concentrations based on mass.

[Table 1]

Table 1

| | (I) | Hydrogen Fluoride Concentration | (IV) | Initial Resistance | E1 | E2 |
|---|---|---|---|---|---|---|
| | Concentration (% by mass) | | Concentration (% by mass) | | | |
| Comparative Example 1-1 | (1-1)<br>1.0 | 500 ppm | - | 100 | 100 | 100 |
| Comparative Example 1-2 | (1-1)<br>1.0 | 1000 ppm | - | 102 | 97 | 105 |
| Comparative Example 1-3 | (1-1)<br>1.0 | 200 ppm | - | 100 | 101 | 101 |
| Comparative Example 1-4 | (1-3)<br>1.0 | 200 ppm | - | 101 | 99 | 101 |
| Comparative Example 1-5 | (1-2)<br>1.0 | 200 ppm | - | 104 | 97 | 103 |
| Example 1-1 | (1-1)<br>1.0 | 60 ppm | - | 91 | 115 | 86 |
| Example 1-2 | (1-1)<br>1.0 | 10 ppm | - | 90 | 117 | 86 |
| Example 1-3 | (1-1)<br>1.0 | 2 ppm | - | 90 | 117 | 85 |
| Comparative Example 1-6 | (1-1)<br>1.0 | 0 ppm | - | 99 | 102 | 98 |
| Example 1-4 | (1-1)<br>1.0 | 0.1 ppm | - | 95 | 108 | 99 |
| Example 1-5 | (1-1)<br>1.0 | 100 ppm | - | 91 | 114 | 86 |
| Example 1-6 | (1-1)<br>1.0 | 150 ppm | - | 96 | 106 | 95 |
| Example 1-7 | (1-3)<br>1.0 | 60 ppm | - | 91 | 113 | 86 |
| Example 1-8 | (1-3)<br>1.0 | 2 ppm | - | 90 | 115 | 85 |
| Comparative Example 1-7 | (1-3)<br>1.0 | 0 ppm | - | 100 | 100 | 99 |
| Example 1-9 | (1-3)<br>1.0 | 0.1 ppm | - | 95 | 109 | 101 |
| Example 1-10 | (1-2)<br>1.0 | 60 ppm | - | 97 | 104 | 95 |

[Table 2]

Table 2

| | (I) Concentration (% by mass) | Hydrogen Fluoride Concentration | (IV) Concentration (% by mass) | Initial Resistance | E1 | E2 |
|---|---|---|---|---|---|---|
| Comparative Example 1-8 | (1-1) 1.0 | 200 ppm | (2-1) 1.0 | 96 | 102 | 95 |
| Example 1-11 | (1-1) 1.0 | 60 ppm | (2-1) 1.0 | 81 | 122 | 71 |
| Example 1-12 | (1-1) 1.0 | 2 ppm | (2-1) 1.0 | 80 | 123 | 71 |
| Comparative Example 1-9 | (1-1) 1.0 | 0 ppm | (2-1) 1.0 | 94 | 105 | 92 |
| Example 1-13 | (1-1) 1.0 | 0.1 ppm | (2-1) 1.0 | 91 | 111 | 82 |
| Comparative Example 1-10 | (1-2) 1.0 | 200 ppm | (2-1) 1.0 | 103 | 97 | 101 |
| Example 1-14 | (1-2) 1.0 | 60 ppm | (2-1) 1.0 | 88 | 111 | 89 |
| Comparative Example 1-11 | (1-1) 1.0 | 200 ppm | (2-2) 1.0 | 100 | 103 | 97 |
| Example 1-15 | (1-1) 1.0 | 60 ppm | (2-2) 1.0 | 83 | 125 | 73 |
| Example 1-16 | (1-1) 1.0 | 2 ppm | (2-2) 1.0 | 83 | 126 | 73 |
| Comparative Example 1-12 | (1-1) 1.0 | 0 ppm | (2-2) 1.0 | 96 | 110 | 94 |
| Example 1-17 | (1-1) 1.0 | 0.1 ppm | (2-2) 1.0 | 89 | 116 | 84 |
| Comparative Example 1-13 | (1-1) 1.0 | 200 ppm | (2-3) 1.0 | 105 | 101 | 104 |
| Example 1-18 | (1-1) 1.0 | 60 ppm | (2-3) 1.0 | 86 | 119 | 80 |
| Example 1-19 | (1-1) 1.0 | 5 ppm | (2-3) 1.0 | 85 | 119 | 79 |
| Comparative Example 1-14 | (1-1) 1.0 | 0 ppm | (2-3) 1.0 | 102 | 103 | 103 |
| Example 1-20 | (1-1) 1.0 | 0.1 ppm | (2-3) 1.0 | 92 | 112 | 90 |
| Comparative Example 1-15 | (1-1) 1.0 | 200 ppm | (2-4) 1.0 | 94 | 93 | 96 |
| Example 1-21 | (1-1) 1.0 | 60 ppm | (2-4) 1.0 | 81 | 116 | 75 |

[Table 3]

Table 3

| | (I) | Hydrogen Fluoride Concentration | (IV) | Initial Resistance | E1 | E2 |
|---|---|---|---|---|---|---|
| | Concentration (% by mass) | | Concentration (% by mass) | | | |
| Comparative Example 1-16 | (1-1) | 200 ppm | (4-3) | 98 | 102 | 95 |
| | 1.0 | | 1.0 | | | |
| Example 1-22 | (1-1) | 60 ppm | (4-3) | 82 | 122 | 73 |
| | 1.0 | | 1.0 | | | |
| Comparative Example 1-17 | (1-1) | 200 ppm | (3-2) | 96 | 103 | 95 |
| | 1.0 | | 1.0 | | | |
| Example 1-23 | (1-1) | 60 ppm | (3-2) | 80 | 122 | 72 |
| | 1.0 | | 1.0 | | | |
| Comparative Example 1-18 | (1-1) | 200 ppm | (4-1) | 109 | 102 | 97 |
| | 1.0 | | 1.0 | | | |
| Example 1-24 | (1-1) | 60 ppm | (4-1) | 89 | 121 | 76 |
| | 1.0 | | 1.0 | | | |
| Comparative Example 1-19 | (1-1) | 200 ppm | (4-2) | 106 | 99 | 100 |
| | 1.0 | | 1.0 | | | |
| Example 1-25 | (1-1) | 60 ppm | (4-2) | 88 | 117 | 78 |
| | 1.0 | | 1.0 | | | |
| Comparative Example 1-20 | (1-1) | 200 ppm | (3-1) | 99 | 102 | 99 |
| | 1.0 | | 4.0 | | | |
| Example 1-26 | (1-1) | 60 ppm | (3-1) | 81 | 123 | 74 |
| | 1.0 | | 4.0 | | | |
| Comparative Example 1-21 | (1-1) | 200 ppm | (3-4) | 100 | 101 | 97 |
| | 1.0 | | 1.0 | | | |
| Example 1-27 | (1-1) | 60 ppm | (3-4) | 84 | 118 | 76 |
| | 1.0 | | 1.0 | | | |
| Comparative Example 1-22 | (1-1) | 200 ppm | (3-3) | 105 | 101 | 99 |
| | 1.0 | | 1.0 | | | |
| Example 1-28 | (1-1) | 60 ppm | (3-3) | 86 | 119 | 78 |
| | 1.0 | | 1.0 | | | |

[Table 4]

Table 4

| | (I) Concentration (% by mass) | Hydrogen Fluoride Concentration | (IV) Concentration (% by mass) | Initial Resistance | E1 | E2 |
|---|---|---|---|---|---|---|
| Comparative Example 1-23 | (1-1) 1.0 | 200 ppm | (5-1) 0.3 | 107 | 101 | 103 |
| Example 1-29 | (1-1) 1.0 | 60 ppm | (5-1) 0.3 | 88 | 117 | 81 |
| Comparative Example 1-24 | (1-1) 1.0 | 200 ppm | (5-2) 0.3 | 109 | 99 | 110 |
| Example 1-30 | (1-1) 1.0 | 60 ppm | (5-2) 0.3 | 90 | 118 | 85 |
| Comparative Example 1-25 | (1-1) 1.0 | 200 ppm | (5-3) 0.3 | 106 | 100 | 104 |
| Example 1-31 | (1-1) 1.0 | 60 ppm | (5-3) 0.3 | 89 | 120 | 80 |
| Comparative Example 1-26 | (1-1) 1.0 | 200 ppm | (6-1) 1.0 | 99 | 101 | 94 |
| Example 1-32 | (1-1) 1.0 | 60 ppm | (6-1) 1.0 | 80 | 124 | 71 |
| Comparative Example 1-27 | (1-1) 1.0 | 200 ppm | (7-2) 1.0 | 110 | 102 | 105 |
| Example 1-33 | (1-1) 1.0 | 60 ppm | (7-2) 1.0 | 89 | 125 | 83 |
| Comparative Example 1-28 | (1-1) 1.0 | 200 ppm | (7-1) 1.0 | 105 | 99 | 102 |
| Example 1-34 | (1-1) 1.0 | 60 ppm | (7-1) 1.0 | 87 | 119 | 82 |
| Comparative Example 1-29 | (1-1) 1.0 | 200 ppm | (8-1) 1.0 | 104 | 102 | 100 |
| Example 1-35 | (1-1) 1.0 | 60 ppm | (8-1) 1.0 | 85 | 121 | 76 |
| Comparative Example 1-30 | (1-1) 1.0 | 200 ppm | (9-1) 1.0 | 100 | 101 | 99 |
| Example 1-36 | (1-1) 1.0 | 60 ppm | (9-1) 1.0 | 83 | 119 | 77 |

[Table 5]

Table 5

| | (I) Concentration (% by mass) | Hydrogen Fluoride Concentration | (IV) Concentration (% by mass) | Initial Resistance | E1 | E2 |
|---|---|---|---|---|---|---|
| Comparative Example 1-1 | (1-1) 1.0 | 500 ppm | - | 100 | 100 | 100 |
| Example 1-37 | (1-1) 0.05 | 60 ppm | - | 99 | 102 | 99 |
| Example 1-38 | (1-1) 0.1 | 60 ppm | - | 93 | 111 | 90 |
| Example 1-39 | (1-1) 0.5 | 60 ppm | - | 90 | 115 | 85 |
| Example 1-1 | (1-1) 1.0 | 60 ppm | - | 91 | 115 | 86 |
| Example 1-40 | (1-1) 2.5 | 60 ppm | - | 96 | 106 | 94 |
| Example 1-41 | (1-1) 4.5 | 60 ppm | - | 99 | 102 | 98 |

From Tables 1 to 4, it can be seen that, when the results are compared under the condition that the type and the concentration of (IV) are the same, the nonaqueous electrolyte solution batteries including the nonaqueous electrolyte solutions of the Examples had lower initial resistance than the nonaqueous electrolyte solution batteries including the nonaqueous electrolyte solutions of the Comparative Examples. In addition, it can be seen that the nonaqueous electrolyte solution batteries including the nonaqueous electrolyte solutions of the Examples had larger E1 and smaller E2 than the nonaqueous electrolyte solution batteries including the nonaqueous electrolyte solutions of the Comparative Examples.

Moreover, from Table 5, it can be seen that the effect of reducing the initial resistance was easily exhibited when the concentration of (1) was 0.01% by mass or more and 5.0% by mass or less and that the initial resistance was the lowest when the concentration was 0.1% by mass or more and 1.5% by mass or less. In addition, it can be seen that the nonaqueous electrolyte solution batteries including the nonaqueous electrolyte solutions of the Examples had larger E1 and smaller E2 than the nonaqueous electrolyte solution batteries including the nonaqueous electrolyte solutions of the Comparative Examples.

[Examples 2-1 to 2-23 and Comparative Examples 2-1 to 2-23]

<Preparation of Nonaqueous Electrolyte Solution>

EC, EMC, and DMC were mixed as (III) in a volume ratio of EC:EMC:DMC = 25:50:25 in a glove box with a dew point of -60°C or lower. Then, while maintaining the internal temperature at 40°C or lower and stirring, $LiPF_6$ as (II) was added and dissolved at a concentration of 1.0 mol/L with respect to the total amount of the nonaqueous electrolyte solution, the compound (1-1) as (I) was added and dissolved at a concentration of 1.0% by mass with respect to the total amount of the nonaqueous electrolyte solution, and FEC and VC as the other additives were added and dissolved at concentrations of 5.0% by mass and 1.0% by mass, respectively, with respect to the total amount of the nonaqueous electrolyte solution. Next, pure water was added to generate hydrogen fluoride in the nonaqueous electrolyte solution, and the solution was stirred for one hour to prepare the nonaqueous electrolyte solution of Comparative Example 2-1.

In addition, as shown in Tables 6 to 8, the nonaqueous electrolyte solutions of the Examples and the Comparative Examples were prepared by the same procedure as that of the nonaqueous electrolyte solution of Comparative Example 2-1 except that the type and the concentration of (I) were changed, the concentration of hydrogen fluoride was changed by the addition of water content, and the type and the concentration of (IV) were changed.

(Production of Nonaqueous Electrolyte Solution Batteries Shown in Tables 6 to 8)

Under an argon atmosphere at a dew point of -50°C or lower, a terminal was welded to the above NCM811 positive electrode, and both sides of the welded product were then sandwiched between two polyethylene separators (5 cm × 6 cm). Further, the outside of the sandwiched product was sandwiched between two silicon-containing graphite negative electrodes to which a terminal had been welded in advance in such a manner that the surface of the negative electrode active material faced the surface of the positive electrode active material. The resultant product was put in an aluminum laminated bag having an opening on one side, and after the nonaqueous electrolyte solution prepared above was vacuum-injected into the bag, the opening was sealed with heat. In this manner, the aluminum laminated nonaqueous electrolyte solution batteries of the Examples and the Comparative Examples shown in Tables 6 to 8 below were produced.

(Evaluation of Nonaqueous Electrolyte Solution Battery)

-Initial Charge and Discharge-

The produced nonaqueous electrolyte solution battery was put in a constant temperature bath at 25°C and, in this state, connected to a charge and discharge device. The battery was charged to 4.2 V at a current density of 0.38 mA/cm$^2$. After 4.2 V was maintained for one hour, the battery was discharged to 2.5 V at a current density of 0.38 mA/cm$^2$. This was defined as one charge and discharge cycle, and three cycles of charge and discharge in total were performed to stabilize the battery.

<Initial Resistance>

After the initial charge and discharge, the battery was charged to 4.2 V at 25°C and 0.38 mA/cm$^2$, and the resistance value was directly measured by impedance measurement.

<Cycle Characteristic Test at 25°C>

A charge and discharge test at an ambient temperature of 25°C was performed to evaluate the cycle characteristic. The battery was charged to 4.2 V and discharged to 2.5 V, and the charge and discharge cycle was repeated at a current density of 1.9 mA/cm$^2$. Then, the degree of deterioration of the cell was evaluated with the discharge capacity retention rate after 200 cycles. The discharge capacity retention rate after 200 cycles was determined by the following equation. The discharge capacity in the first cycle in the cycle characteristic test at the ambient temperature of 25°C was defined as the initial discharge capacity.

(Discharge Capacity Retention Rate after 200 Cycles)

Discharge capacity retention rate (%) = (discharge capacity after 200 cycles/initial discharge capacity) × 100

(Resistance Value after 200 Cycles)

The nonaqueous electrolyte solution battery after the cycle characteristic test was charged to 4.2 V at 25°C and 0.38 mA/cm$^2$, and the resistance value was directly measured by impedance measurement.

In Tables 6 to 8 below, the initial resistance values are the relative values based on the value of Comparative Example 2-1 regarded as 100. "E3" indicates the discharge capacity retention rates after the cycle characteristic test at 25°C (the relative values based on the value of Comparative Example 2-1 regarded as 100), and "E4" indicates the resistance values after the cycle characteristic test at 25°C (the relative values based on the value of Comparative Example 2-1 regarded as 100). The concentrations (ppm) of hydrogen fluoride are concentrations based on mass.

[Table 6]

Table 6

| | (I) | Hydrogen Fluoride Concentration | (IV) | Other Additive | | Initial Resistance | E3 | E4 |
|---|---|---|---|---|---|---|---|---|
| | Concentration (% by mass) | | Concentration (% by mass) | Concentration (% by mass) | | | | |
| Comparative Example 2-1 | (1-1) | 200 ppm | - | FEC | VC | 100 | 100 | 100 |
| | 1.0 | | - | 5.0 | 1.0 | | | |
| Comparative Example 2-2 | (1-1) | 1000 ppm | - | FEC | VC | 103 | 97 | 105 |
| | 1.0 | | - | 5.0 | 1.0 | | | |
| Comparative Example 2-3 | (1-3) | 200 ppm | - | FEC | VC | 100 | 99 | 101 |
| | 1.0 | | - | 5.0 | 1.0 | | | |
| Example 2-1 | (1-1) | 100 ppm | | FEC | VC | 90 | 112 | 86 |
| | 1.0 | | - | 5.0 | 1.0 | | | |
| Example 2-2 | (1-1) | 60 ppm | | FEC | VC | 90 | 114 | 86 |
| | 1.0 | | - | 5.0 | 1.0 | | | |
| Example 2-3 | (1-3) | 60 ppm | | FEC | VC | 89 | 115 | 86 |
| | 1.0 | | - | 5.0 | 1.0 | | | |
| Comparative Example 2-4 | (1-1) | 200 ppm | (2-1) | FEC | VC | 95 | 102 | 91 |
| | 1.0 | | 1.0 | 5.0 | 1.0 | | | |
| Example 2-4 | (1-1) | 60 ppm | (2-1) | FEC | VC | 80 | 123 | 78 |
| | 1.0 | | 1.0 | 5.0 | 1.0 | | | |
| Comparative Example 2-5 | (1-3) | 200 ppm | (2-1) | FEC | VC | 95 | 102 | 92 |
| | 1.0 | | 1.0 | 5.0 | 1.0 | | | |
| Example 2-5 | (1-3) | 60 ppm | (2-1) | FEC | VC | 80 | 122 | 79 |
| | 1.0 | | 1.0 | 5.0 | 1.0 | | | |
| Comparative Example 2-6 | (1-1) | 200 ppm | (2-2) | FEC | VC | 99 | 103 | 99 |
| | 1.0 | | 1.0 | 5.0 | 1.0 | | | |
| Example 2-6 | (1-1) | 60 ppm | (2-2) | FEC | VC | 82 | 125 | 83 |
| | 1.0 | | 1.0 | 5.0 | 1.0 | | | |
| Comparative Example 2-7 | (1-1) | 200 ppm | (2-3) | FEC | VC | 105 | 102 | 104 |
| | 1.0 | | 1.0 | 5.0 | 1.0 | | | |
| Example 2-7 | (1-1) | 60 ppm | (2-3) | FEC | VC | 89 | 118 | 84 |
| | 1.0 | | 1.0 | 5.0 | 1.0 | | | |
| Comparative Example 2-8 | (1-1) | 200 ppm | (2-4) | FEC | VC | 94 | 85 | 96 |
| | 1.0 | | 1.0 | 5.0 | 1.0 | | | |
| Example 2-8 | (1-1) | 60 ppm | (2-4) | FEC | VC | 79 | 110 | 81 |
| | 1.0 | | 1.0 | 5.0 | 1.0 | | | |

[Table 7]

Table 7

| | (I) | Hydrogen Fluoride Concentration | (IV) | Other Additive | | Initial Resistance | E3 | E4 |
|---|---|---|---|---|---|---|---|---|
| | Concentration (% by mass) | | Concentration (% by mass) | Concentration (% by mass) | | | | |
| Comparative Example 2-9 | (1-1) | 200 ppm | (4-3) | FEC | VC | 97 | 102 | 96 |
| | 1.0 | | 1.0 | 5.0 | 1.0 | | | |
| Example 2-9 | (1-1) | 60 ppm | (4-3) | FEC | VC | 81 | 123 | 81 |
| | 1.0 | | 1.0 | 5.0 | 1.0 | | | |
| Comparative Example 2-10 | (1-1) | 200 ppm | (4-1) | FEC | VC | 112 | 102 | 99 |
| | 1.0 | | 1.0 | 5.0 | 1.0 | | | |
| Example 2-10 | (1-1) | 60 ppm | (4-1) | FEC | VC | 89 | 119 | 83 |
| | 1.0 | | 1.0 | 5.0 | 1.0 | | | |
| Comparative Example 2-11 | (1-1) | 200 ppm | (4-2) | FEC | VC | 106 | 101 | 100 |
| | 1.0 | | 1.0 | 5.0 | 1.0 | | | |
| Example 2-11 | (1-1) | 60 ppm | (4-2) | FEC | VC | 87 | 117 | 84 |
| | 1.0 | | 1.0 | 5.0 | 1.0 | | | |
| Comparative Example 2-12 | (1-1) | 200 ppm | (3-2) | FEC | VC | 96 | 103 | 95 |
| | 1.0 | | 1.0 | 5.0 | 1.0 | | | |
| Example 2-12 | (1-1) | 60 ppm | (3-2) | FEC | VC | 81 | 122 | 80 |
| | 1.0 | | 1.0 | 5.0 | 1.0 | | | |
| Comparative Example 2-13 | (1-1) | 200 ppm | (3-1) | FEC | VC | 98 | 102 | 99 |
| | 1.0 | | 4.0 | 5.0 | 1.0 | | | |
| Example 2-13 | (1-1) | 60 ppm | (3-1) | FEC | VC | 79 | 123 | 80 |
| | 1.0 | | 4.0 | 5.0 | 1.0 | | | |
| Comparative Example 2-14 | (1-1) | 200 ppm | (3-4) | FEC | VC | 101 | 101 | 97 |
| | 1.0 | | 1.0 | 5.0 | 1.0 | | | |
| Example 2-14 | (1-1) | 60 ppm | (3-4) | FEC | VC | 82 | 117 | 81 |
| | 1.0 | | 1.0 | 5.0 | 1.0 | | | |
| Comparative Example 2-15 | (1-1) | 200 ppm | (3-3) | FEC | VC | 107 | 100 | 99 |
| | 1.0 | | 2.0 | 5.0 | 1.0 | | | |
| Example 2-15 | (1-1) | 60 ppm | (3-3) | FEC | VC | 83 | 117 | 81 |
| | 1.0 | | 2.0 | 5.0 | 1.0 | | | |

[Table 8]

Table 8

| | (I) | Hydrogen Fluoride Concentration | (IV) | Other Additive | | Initial Resistance | E3 | E4 |
|---|---|---|---|---|---|---|---|---|
| | Concentration (% by mass) | | Concentration (% by mass) | Concentration (% by mass) | | | | |
| Comparative Example 2-16 | (1-1) | 200 ppm | (5-1) | FEC | VC | 110 | 100 | 101 |
| | 1.0 | | 0.3 | 5.0 | 1.0 | | | |
| Example 2-16 | (1-1) | 60 ppm | (5-1) | FEC | VC | 88 | 116 | 84 |
| | 1.0 | | 0.3 | 5.0 | 1.0 | | | |
| Comparative Example 2-17 | (1-1) | 200 ppm | (5-2) | FEC | VC | 113 | 100 | 109 |
| | 1.0 | | 0.3 | 5.0 | 1.0 | | | |
| Example 2-17 | (1-1) | 60 ppm | (5-2) | FEC | VC | 89 | 117 | 85 |
| | 1.0 | | 0.3 | 5.0 | 1.0 | | | |
| Comparative Example 2-18 | (1-1) | 200 ppm | (5-3) | FEC | VC | 109 | 100 | 100 |
| | 1.0 | | 0.3 | 5.0 | 1.0 | | | |
| Example 2-18 | (1-1) | 60 ppm | (5-3) | FEC | VC | 88 | 121 | 84 |
| | 1.0 | | 0.3 | 5.0 | 1.0 | | | |
| Comparative Example 2-19 | (1-1) | 200 ppm | (6-1) | FEC | VC | 97 | 101 | 91 |
| | 1.0 | | 1.0 | 5.0 | 1.0 | | | |
| Example 2-19 | (1-1) | 60 ppm | (6-1) | FEC | VC | 80 | 124 | 78 |
| | 1.0 | | 1.0 | 5.0 | 1.0 | | | |
| Comparative Example 2-20 | (1-1) | 200 ppm | (7-2) | FEC | VC | 115 | 102 | 105 |
| | 1.0 | | 1.0 | 5.0 | 1.0 | | | |
| Example 2-20 | (1-1) | 60 ppm | (7-2) | FEC | VC | 89 | 123 | 84 |
| | 1.0 | | 1.0 | 5.0 | 1.0 | | | |
| Comparative Example 2-21 | (1-1) | 200 ppm | (7-1) | FEC | VC | 108 | 100 | 97 |
| | 1.0 | | 1.0 | 5.0 | 1.0 | | | |
| Example 2-21 | (1-1) | 60 ppm | (7-1) | FEC | VC | 88 | 119 | 81 |
| | 1.0 | | 1.0 | 5.0 | 1.0 | | | |
| Comparative Example 2-22 | (1-1) | 200 ppm | (8-1) | FEC | VC | 106 | 102 | 99 |
| | 1.0 | | 1.0 | 5.0 | 1.0 | | | |
| Example 2-22 | (1-1) | 60 ppm | (8-1) | FEC | VC | 87 | 120 | 82 |
| | 1.0 | | 1.0 | 5.0 | 1.0 | | | |
| Comparative Example 2-23 | (1-1) | 200 ppm | (9-1) | FEC | VC | 100 | 101 | 99 |
| | 1.0 | | 1.0 | 5.0 | 1.0 | | | |
| Example 2-23 | (1-1) | 60 ppm | (9-1) | FEC | VC | 85 | 118 | 80 |
| | 1.0 | | 1.0 | 5.0 | 1.0 | | | |

From Tables 6 to 8, it can be seen that the nonaqueous electrolyte solution batteries including the nonaqueous electrolyte solutions of the Examples had lower initial resistance than the nonaqueous electrolyte solution batteries

including the nonaqueous electrolyte solutions of the Comparative Examples. In addition, it can be seen that the nonaqueous electrolyte solution batteries including the nonaqueous electrolyte solutions of the Examples had larger E3 and smaller E4 than the nonaqueous electrolyte solution batteries including the nonaqueous electrolyte solutions of the Comparative Examples.

INDUSTRIAL APPLICABILITY

According to the present disclosure, a nonaqueous electrolyte solution capable of lowering the initial resistance of a nonaqueous electrolyte solution battery and a nonaqueous electrolyte solution battery having low initial resistance can be provided.

Although the present disclosure has been explained in detail and referring to specific embodiments, it will be apparent to a person skilled in the art that various changes and modifications can be made without departing from the spirit and the scope of the present disclosure.

The present application is based on a Japanese Patent Application (No. 2023-123775) filed on July 28, 2023, the contents of which are incorporated herein by reference.

## Claims

**1.** A nonaqueous electrolyte solution, comprising:

(I) a compound represented by the following general formula (1):

[Chem. 1]

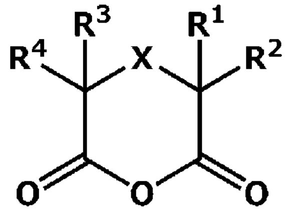

(1)

wherein in the general formula (1), $R^1$ to $R^4$ each independently represent a hydrogen atom, a halogen atom, an alkyl group, an alkenyl group, or an aryl group, and
X represents an oxygen atom, a sulfur atom, or an $SO_2$ group;

(II) a solute;
(III) a nonaqueous organic solvent; and
hydrogen fluoride,
wherein a concentration of the hydrogen fluoride with respect to a total amount of the nonaqueous electrolyte solution is 0.1 ppm by mass or more and 180 ppm by mass or less.

**2.** The nonaqueous electrolyte solution according to claim 1, further comprising (IV) at least one compound selected from the group consisting of the following compounds (2) to (9):

a compound (2): at least one compound selected from the group consisting of a compound represented by the following general formula (2-1) and a compound represented by the following general formula (2-2),

[Chem. 2]

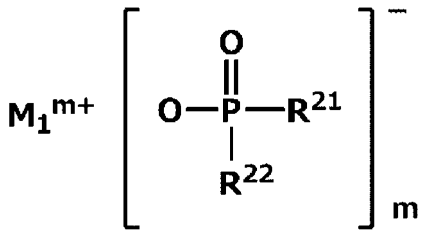

(2-1)

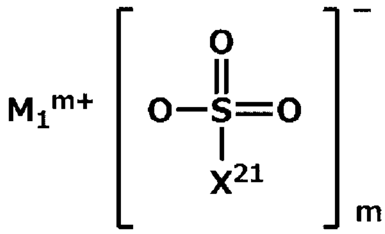

(2-2)

wherein in the general formula (2-1), $R^{21}$ and $R^{22}$ are each independently a fluorine atom or an organic group selected from the group consisting of an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and a fluorine atom, an oxygen atom, and/or an unsaturated bond may be present in the organic group, and the general formula (2-1) includes at least one P-F bond, and

in the general formula (2-2), $X^{21}$ is a fluorine atom or an organic group selected from the group consisting of an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and the organic group may contain at least one fluorine atom, and an oxygen atom and/or an unsaturated bond may be present in the organic group, and

in the general formula (2-1) and the general formula (2-2), $M_1^{m+}$ is a proton, a metal cation, or an onium cation, and m represents a valence of the corresponding cation;

a compound (3): at least one compound selected from the group consisting of a compound represented by the following general formula (3-1), a compound represented by the following general formula (3-2), and a compound represented by the following general formula (3-3),

[Chem. 3]

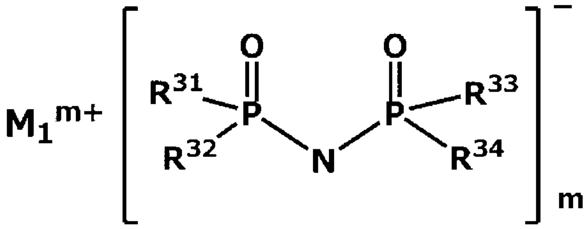

(3-1)

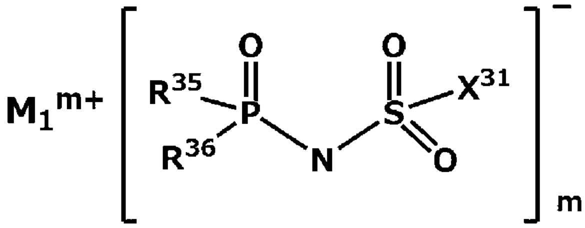

(3-2)

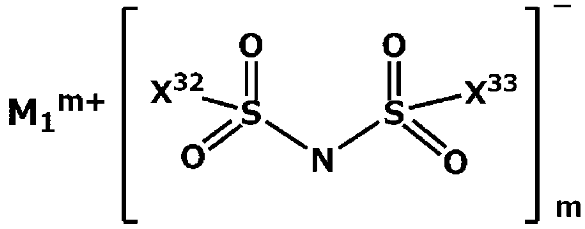

(3-3)

wherein in the general formulae (3-1) to (3-3), $R^{31}$ to $R^{36}$ are each independently a fluorine atom or an organic group selected from the group consisting of an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and a fluorine atom, an oxygen atom, and/or an unsaturated bond may be present in the organic group, $X^{31}$ to $X^{33}$ are each independently a fluorine atom or an organic group selected from the group consisting of an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and a fluorine atom, an oxygen atom, and/or an unsaturated bond may be present in the organic group,

the general formula (3-1) includes at least one P-F bond, the general formula (3-2) includes at least one of a P-F bond and an S-F bond, the general formula (3-3) includes at least one S-F bond, and

$M_1^{m+}$ is a proton, a metal cation, or an onium cation, and m represents a valence of the corresponding cation;

a compound (4): at least one compound selected from the group consisting of a compound represented by the following general formula (4-1) and a compound represented by the following general formula (4-2),

[Chem. 4]

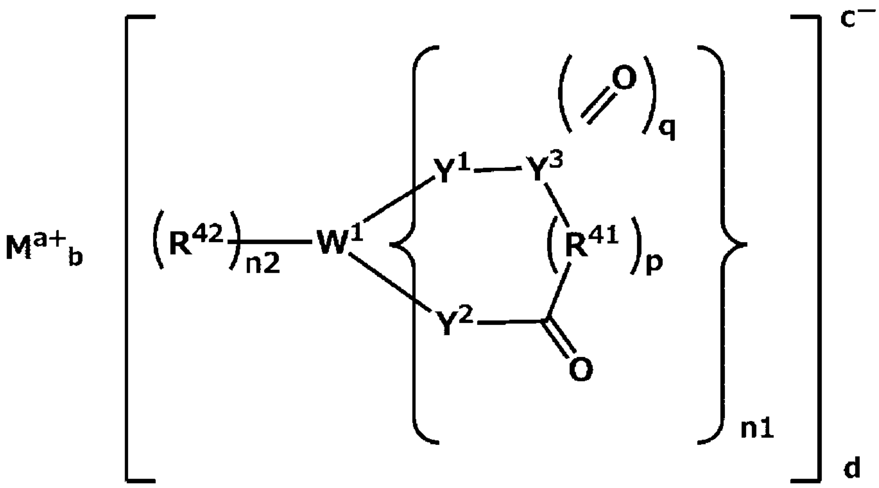

(4-1)

wherein in the general formula (4-1), $W^1$ represents a boron atom, a phosphorus atom, or a silicon atom, n1 is 0 to 3, n2 is 0 to 4, p is 0 or 1,

$R^{41}$ represents an alkylene group having 1 to 10 carbon atoms, a halogenated alkylene group having 1 to 10 carbon atoms, an arylene group having 6 to 20 carbon atoms, or a halogenated arylene group having 6 to 20 carbon atoms (wherein the groups may contain a substituent or may contain a heteroatom in the structures thereof, and when n1 is 2 or more, the n1 $R^{41}$'s may be bonded to each other),

$R^{42}$ represents a halogen atom,

$Y^1$ and $Y^2$ each independently represent an oxygen atom or a sulfur atom,

$Y^3$ represents a carbon atom or a sulfur atom,

q oxo group (=O) is bonded to the carbon atom or the sulfur atom represented by $Y^3$,

q is 1 when $Y^3$ is a carbon atom, q is 1 or 2 when $Y^3$ is a sulfur atom,

$M^{a+}$ represents an alkali metal cation, an alkaline earth metal cation, or an onium cation,

a represents a valence of the corresponding cation, and

a to d are each 1 or 2 and satisfy $a \times b = c \times d$,

[Chem. 5]

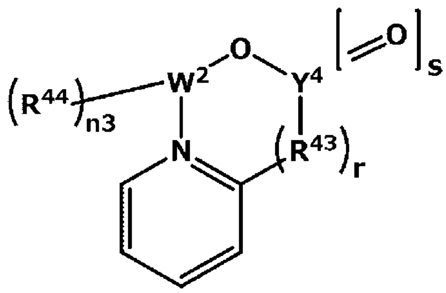

(4-2)

wherein in the general formula (4-2), $R^{43}$ represents an alkylene group having 1 to 10 carbon atoms, a halogenated alkylene group having 1 to 10 carbon atoms, an arylene group having 6 to 20 carbon atoms, or a halogenated arylene group having 6 to 20 carbon atoms (wherein the groups may contain a substituent or may contain a heteroatom in the structures thereof),

r is 0 or 1,

$Y^4$ represents a carbon atom or a sulfur atom,

s oxo group (=O) is bonded to the carbon atom or the sulfur atom represented by $Y^4$,

s is 1 when $Y^4$ is a carbon atom, s is 1 or 2 when $Y^4$ is a sulfur atom,
$W^2$ represents a boron atom or a phosphorus atom,
$R^{44}$ represents a halogen atom,
n3 is 2 when $W^2$ is the boron atom, and n3 is 4 when $W^2$ is the phosphorus atom;
a compound (5): a compound represented by the following general formula (5),

[Chem. 6]

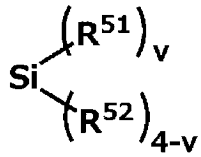

(5)

wherein in the general formula (5), $R^{51}$'s each independently represent a group having a carbon-carbon unsaturated bond,
when there are a plurality of $R^{52}$'s, $R^{52}$'s each independently represent a fluorine atom or an alkyl group having 1 to 10 carbon atoms, the alkyl group may have at least one of a fluorine atom and an oxygen atom, and
v represents an integer of 2 to 4;
a compound (6): a compound represented by the following general formula (6),

[Chem. 7]

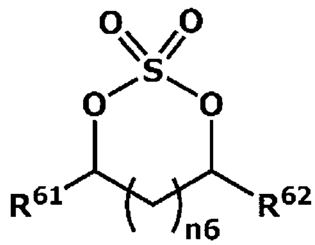

(6)

wherein in the general formula (6), $R^{61}$ and $R^{62}$ each independently represent a hydrogen atom, an alkyl group having 1 or 2 carbon atoms, an alkenyl group having 2 to 5 carbon atoms, or an aryl group having 6 to 10 carbon atoms which may be substituted with an alkyl group, any hydrogen atom of the alkyl group, the alkenyl group, and the aryl group represented by $R^{61}$ and $R^{62}$ may be substituted with a halogen atom, and n6 is 0 or 1;
a compound (7): at least one compound selected from the group consisting of a compound represented by the following general formula (7-1) and a compound represented by the following general formula (7-2),

[Chem. 8]

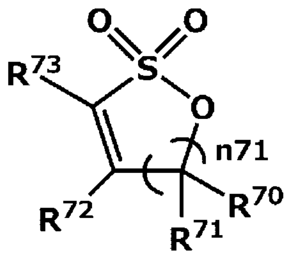

(7-1)

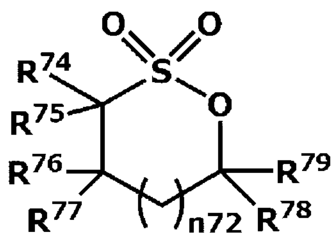

(7-2)

wherein in the general formula (7-1), $R^{70}$ to $R^{73}$ each independently represent a hydrogen atom, a fluorine atom, an alkyl group having 1 to 5 carbon atoms, or a fluoroalkyl group having 1 to 4 carbon atoms, and n71 represents an integer of 1 to 3, and
in the general formula (7-2), $R^{74}$ to $R^{79}$ each independently represent a hydrogen atom, an alkyl group having 1 to 6 carbon atoms, or a fluoroalkyl group having 1 to 4 carbon atoms, and n72 represents an integer of 0 to 2;
a compound (8): a compound represented by the following general formula (8),

[Chem. 9]

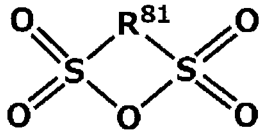

(8)

wherein in the general formula (8), $R^{81}$ represents an alkylene group having 1 to 6 carbon atoms, an oxygen atom may be included in a carbon atom-carbon atom bond in the alkylene group, any hydrogen atom of the alkylene group may be substituted with an alkyl group, and any hydrogen atom of the alkylene group and the alkyl group may be substituted with a halogen atom; and
a compound (9): a compound represented by the following general formula (9),

[Chem. 10]

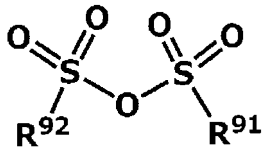

(9)

wherein in the general formula (9), $R^{91}$ and $R^{92}$ each independently represent an alkyl group having 1 to 6 carbon atoms.

3. The nonaqueous electrolyte solution according to claim 1, wherein the concentration of the hydrogen fluoride with respect to the total amount of the nonaqueous electrolyte solution is 1 ppm by mass or more and 70 ppm by mass or less.

4. The nonaqueous electrolyte solution according to claim 1, wherein a content of the (I) with respect to the total amount of the nonaqueous electrolyte solution is 0.01% by mass or more and 10% by mass or less.

5. The nonaqueous electrolyte solution according to claim 1, wherein a content of the (IV) with respect to the total amount of the nonaqueous electrolyte solution is 0.01% by mass or more and 10% by mass or less.

6. The nonaqueous electrolyte solution according to claim 1, wherein the compound represented by the general formula (1) is at least one compound selected from the group consisting of diglycolic anhydride, methyldiglycolic anhydride, dimethyldiglycolic anhydride, ethyldiglycolic anhydride, vinyldiglycolic anhydride, tetrafluorodiglycolic anhydride, allyldiglycolic anhydride, thiodiacetic anhydride, and sulfodiacetic anhydride.

7. The nonaqueous electrolyte solution according to claim 2, wherein the compound (2) is at least one compound selected from the group consisting of lithium difluorophosphate, lithium fluorosulfonate, and lithium trifluoromethanesulfonate.

8. The nonaqueous electrolyte solution according to claim 2, wherein the compound (3) is at least one compound selected from the group consisting of lithium bis(fluorosulfonyl)imide, lithium (fluorosulfonyl)(difluorophosphoryl)imide, lithium bis(trifluoromethanesulfonyl)imide, lithium bis(difluorophosphoryl)imide, lithium bis(pentafluoroethanesulfonyl)imide, and lithium (fluorosulfonyl)(trifluoromethanesulfonyl)imide.

9. The nonaqueous electrolyte solution according to claim 2, wherein the compound (4) is at least one compound selected from the group consisting of lithium tetrafluoroborate, lithium bis(oxalato)borate, lithium difluoro(oxalato)borate, lithium tris(oxalato)phosphate, lithium difluorobis(oxalato)phosphate, lithium tetrafluoro(oxalato)phosphate, lithium difluoro(malonato)borate, lithium tetrafluoro(malonato)phosphate, tetrafluoro(picolinato)phosphate, and difluoro(picolinato)borate.

10. The nonaqueous electrolyte solution according to claim 2, wherein the compound (5) is at least one compound selected from the group consisting of trivinylmethylsilane, trivinylfluorosilane, and tetravinylsilane.

11. The nonaqueous electrolyte solution according to claim 2, wherein the compound (6) is at least one compound selected from the group consisting of 1,3,2-dioxathiolane-2,2-dioxide and 1,3,2-dioxathiane-2,2-dioxide.

**12.** The nonaqueous electrolyte solution according to claim 2, wherein the compound (8) is at least one compound selected from the group consisting of 1,2-ethanedisulfonic anhydride and 1,3-propanedisulfonic anhydride.

**13.** The nonaqueous electrolyte solution according to claim 2, wherein the compound (9) is at least one compound selected from the group consisting of methanesulfonic anhydride and ethanesulfonic anhydride.

**14.** The nonaqueous electrolyte solution according to claim 1, wherein the (II) is at least one selected from the group consisting of $LiPF_6$, $LiSbF_6$, $LiAsF_6$, $LiClO_4$, $LiAlO_2$, $LiAlCl_4$, LiCl, and LiI or at least one selected from the group consisting of $NaPF_6$, $NaSbF_6$, $NaAsF_6$, $NaClO_4$, $NaAlO_2$, $NaAlCl_4$, NaCl, and NaI.

**15.** The nonaqueous electrolyte solution according to claim 1, wherein the (III) contains at least one selected from the group consisting of a cyclic ester, a chain ester, a cyclic ether, a chain ether, a sulfone compound, a sulfoxide compound, and an ionic liquid.

**16.** The nonaqueous electrolyte solution according to claim 15, wherein the cyclic ester is a cyclic carbonate, and the cyclic carbonate is at least one selected from the group consisting of ethylene carbonate, propylene carbonate, and fluoroethylene carbonate.

**17.** The nonaqueous electrolyte solution according to claim 15, wherein the chain ester is a chain carbonate, and the chain carbonate is at least one selected from the group consisting of ethyl methyl carbonate, dimethyl carbonate, diethyl carbonate, and methyl propyl carbonate.

**18.** A nonaqueous electrolyte solution battery, at least comprising:

a positive electrode;
a negative electrode;
a separator; and
the nonaqueous electrolyte solution according to any one of claims 1 to 17.

**19.** A method for decreasing the initial resistance of a nonaqueous electrolyte solution battery including a nonaqueous electrolyte solution, comprising:

using, as the nonaqueous electrolyte solution, a nonaqueous electrolyte solution containing

(I) a compound represented by the following general formula (1):

[Chem. 11]

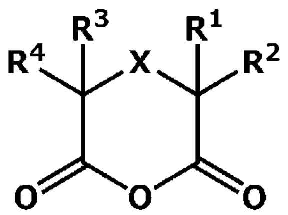

(1)

wherein in the general formula (1), $R^1$ to $R^4$ each independently represent a hydrogen atom, a halogen atom, an alkyl group, an alkenyl group, or an aryl group, and
X represents an oxygen atom, a sulfur atom, or an $SO_2$ group

(II) a solute,
(III) a nonaqueous organic solvent, and

hydrogen fluoride; and
adjusting a concentration of the hydrogen fluoride with respect to a total amount of the nonaqueous electrolyte solution to 0.1 ppm by mass or more and 180 ppm by mass or less.

**INTERNATIONAL SEARCH REPORT**

International application No. **PCT/JP2024/026840**

**A. CLASSIFICATION OF SUBJECT MATTER**

***H01M 10/0567***(2010.01)i; ***H01M 10/052***(2010.01)i; ***H01M 10/054***(2010.01)i; ***H01M 10/0568***(2010.01)i; ***H01M 10/0569***(2010.01)i
FI: H01M10/0567; H01M10/052; H01M10/054; H01M10/0568; H01M10/0569

According to International Patent Classification (IPC) or to both national classification and IPC

**B. FIELDS SEARCHED**

Minimum documentation searched (classification system followed by classification symbols)

H01M10/0567; H01M10/052; H01M10/054; H01M10/0568; H01M10/0569

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2002-8717 A (MITSUI CHEMICALS, INC.) 11 January 2002 (2002-01-11) paragraphs [0048], [0074], table 1, examples 4-6 | 1, 3-6, 14-19 |
| Y | paragraphs [0048], [0074], table 1, examples 4-6 | 2, 7-13 |
| Y | WO 2023/054128 A1 (CENTRAL GLASS CO., LTD.) 06 April 2023 (2023-04-06) paragraphs [0071]-[0072] | 2, 7-13 |
| A | JP 10-270074 A (UBE INDUSTRIES, LTD.) 09 October 1998 (1998-10-09) claim 1 | 1-19 |

☐ Further documents are listed in the continuation of Box C.  ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **03 October 2024** | **15 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (July 2022)

**INTERNATIONAL SEARCH REPORT**
**Information on patent family members**

International application No.
**PCT/JP2024/026840**

| Patent document cited in search report | Publication date (day/month/year) | Patent family member(s) | Publication date (day/month/year) |
|---|---|---|---|
| JP 2002-8717 A | 11 January 2002 | (Family: none) | |
| WO 2023/054128 A1 | 06 April 2023 | EP 4394985 A1<br>paragraphs [0092]-[0093]<br>CN 118056307 A<br>KR 10-2024-0067239 A | |
| JP 10-270074 A | 09 October 1998 | US 6045945 A<br>claim 1<br>FR 2761531 A1<br>KR 10-1998-0080656 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002008717 A
- JP 5412705 B
- JP 3497812 B
- JP 4847675 B
- JP 3439085 B
- JP 5353923 B
- JP 3760540 B
- JP 4190162 B
- JP 4379567 B